(19) Europäisches Patentamt / European Patent Office / Office européen des brevets

(11) **EP 3 544 084 B1**

(12) **EUROPEAN PATENT SPECIFICATION**

(45) Date of publication and mention of the grant of the patent:
**02.12.2020 Bulletin 2020/49**

(51) Int Cl.:
*H01M 2/14* *(2006.01)*          *H01M 2/16* *(2006.01)*
*H01M 10/052* *(2010.01)*       *H01M 10/0562* *(2010.01)*
*H01M 4/131* *(2010.01)*

(21) Application number: **18191974.7**

(22) Date of filing: **31.08.2018**

(54) **ELECTRODE GROUP, SECONDARY BATTERY, BATTERY PACK, VEHICLE, AND STATIONARY POWER SUPPLY**

ELEKTRODENGRUPPE, SEKUNDÄRBATTERIE, BATTERIEPACK, FAHRZEUG UND STATIONÄRE STROMVERSORGUNG

GROUPE D'ÉLECTRODE, BATTERIE SECONDAIRE, BLOC-BATTERIE, VÉHICULE ET ALIMENTATION ÉLECTRIQUE STATIONNAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2018 JP 2018053860**

(43) Date of publication of application:
**25.09.2019 Bulletin 2019/39**

(73) Proprietor: **Kabushiki Kaisha Toshiba**
**Tokyo 105-0023 (JP)**

(72) Inventors:
• **Sugizaki, Tomoko**
  **Tokyo, 105-0023 (JP)**
• **Yoshima, Kazuomi**
  **Tokyo, 105-0023 (JP)**
• **Harada, Yasuhiro**
  **Tokyo, 105-0023 (JP)**
• **Takami, Norio**
  **Tokyo, 105-0023 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 297 069          US-A1- 2014 017 557
US-A1- 2014 199 598      US-A1- 2014 342 209
US-A1- 2018 006 324**

**Description**

FIELD

The present disclosure relate generally to an electrode group, a secondary battery, a battery pack, a vehicle, and a stationary power supply.

BACKGROUND

A lithium ion secondary battery is widely used as a power supply for an electronic device or an onboard power supply. A secondary battery such as a lithium ion secondary battery includes an electrode group and an electrolyte, and the electrode group includes a negative electrode, a positive electrode, and a separator. Each of the positive electrode and the negative electrode includes a current collector, and an active material-containing layer provided on the current collector. The active material-containing layer contains active material particles.

The separator is located between the positive electrode and the negative electrode and prevents the electrodes from coming into contact with each other and causing an internal short circuit. As the separator, for example, a self-supporting film such as a nonwoven fabric or a porous film is used. In addition, using, as the separator, a self-supporting film obtained by forming the inorganic solid particles of a solid electrolyte or the like into a thin plate shape is also examined. However, since such a self-supporting film type separator needs a mechanical strength to some extent, it is difficult to decrease the film thickness. For this reason, when the self-supporting film type separator is used, the energy density of the secondary battery can hardly be raised.

So, use of an electrode-integrated type separator is examined. As the electrode-integrated type separator, for example, an aggregate of organic fibers formed by directly depositing the organic fibers on an active material-containing layer, an inorganic solid particle film formed by applying a slurry containing inorganic solid particles onto an active material-containing layer and drying it, or the like can be used. The electrode-integrated type separator is directly formed on the active material-containing layer by the above-described method, and therefore, does not need the mechanical strength. For this reason, the film thickness of the electrode-integrated type separator can be made smaller than the film thickness of the self-supporting film type separator.

US 2014/342209 A1 describes a composition for printing a liquid or gel separator utilized to separate and space apart first and second conductors or electrodes of an energy storage device, such as a battery or a supercapacitor. A composition comprises a plurality of particles, typically having a size (in any dimension) between about 0.5 to about 50 microns; a first, ionic liquid electrolyte; and a polymer or polymeric precursor. The plurality of particles comprise diatoms, diatomaceous frustules, and/or diatomaceous fragments or remains. The composition comprises a second electrolyte different from the first electrolyte; the plurality of particles are comprised of silicate glass; the first and second electrolytes comprise zinc tetrafluoroborate salt in 1-ethyl-3-methylimidazolium tetrafluoroborate ionic liquid; and the polymer comprises polyvinyl alcohol ("PVA") or polyvinylidene fluoride ("PVFD").

US 2014/017557 A1 describes a composition for printing a liquid or gel separator.

US 2018/006324 A1 describes a battery including: a positive electrode; a negative electrode; and an electrolyte. The electrolyte contains an electrolyte solution, and a polymer compound holding the electrolyte solution. The polymer compound includes a copolymer having at least predetermined two kinds of repeating units.

EP 3 297 069 A1 describes an electrode. The electrode includes a current collector and an active material-containing layer. The active material-containing layer is provided on the current collector. The active material-containing layer includes active material particles and insulator particles. The active material-containing layer has a first surface facing the current collector and a second face as a surface of the active material-containing layer. The second face includes a surface of a part of the insulator particles. A volume ratio of the insulator particles decreases from the second face toward the first surface in the active material-containing layer.

US 2014/199598 A1 describes a solid electrolyte secondary battery includes a positive electrode, a negative electrode, and a solid electrolyte layer, wherein at least one selected from the positive electrode and the negative electrode comprises active material particles, first solid electrolyte particles located the vicinity of a surface of the active material particles, and second solid electrolyte particles located a gap between the active material particles. A particle size ratio of a second solid electrolyte particle size D2 to a first solid electrolyte particle size D1 (D2/D1) satisfies the relation of $3 < D2/D1 < 50$, where D1 and D2 denote a particle size of the first and second solid electrolyte particles, respectively.

BRIEF DESCRIPTION OF THE DRAWINGS

FIG. 1 is a cross-sectional view schematically showing an example of the electrode group according to the first approach;

FIG. 2 is an enlarged cross-sectional view showing a portion of the separator shown in FIG. 1;

FIG. 3 is an enlarged cross-sectional view showing a portion of another example of the separator shown in FIG. 1;

FIG. 4 is an enlarged cross-sectional view showing a portion of a separator according to a first modification;

FIG. 5 is a cross-sectional view schematically showing an example of an electrode group including a separator according to a second modification;

FIG. 6 is a cross-sectional view schematically showing an example of a secondary battery according to the second approach;

FIG. 7 is an enlarged cross-sectional view of section A of the secondary battery shown in FIG. 6;

FIG. 8 is a partially cut-out perspective view schematically showing another example of a secondary battery according to the second approach;

FIG. 9 is an enlarged cross-sectional view of section B of the secondary battery shown in FIG. 8;

FIG. 10 is a perspective view schematically showing an example of the battery module according to the third approach;

FIG. 11 is an exploded perspective view schematically showing an example of the battery pack according to the fourth approach;

FIG. 12 is a block diagram showing an example of an electric circuit of the battery pack shown in FIG. 11;

FIG. 13 is a cross-sectional view schematically showing an example of a vehicle according to the fifth approach;

FIG. 14 is a block diagram showing an example of a system including a stationary power supply according to the sixth approach;

FIG. 15 is a cross-sectional view schematically showing an example of an electrode group using a self-supporting film made of a solid electrolyte layer as a separator; and

FIG. 16 is a cross-sectional view schematically showing an example of an electrode group using a laminate of a layer of organic fibers and a solid electrolyte film as a separator.

## DETAILED DESCRIPTION

The object of the present invention is solved by the subject matter of the independent claims where advantageous embodiments are described in dependent claims. Examples and technical descriptions of apparatuses, products and/or methods in the description and/or drawings which are not covered by the claims are presented not as embodiments of the invention but as background art or examples useful for understanding the invention. According to one approach, an electrode group is provided. The electrode group includes a positive electrode, a negative electrode, and a separator. The positive electrode includes a positive electrode active material-containing layer containing a positive electrode active material. The negative electrode includes a negative electrode active material-containing layer containing negative electrode active material. The separator is positioned at least between the positive electrode and the negative electrode. The separator includes a layer, first solid electrolyte particles, and second solid electrolyte particles. The layer includes organic fibers. The first solid electrolyte particles are in contact with the organic fibers and the positive electrode active material-containing layer. The second solid electrolyte particles are in contact with the organic fibers and the negative electrode active material-containing layer.

According to another approach, a secondary battery is provided. The secondary battery includes the electrode group according to the approach and an electrolyte.

According to another approach, a battery pack is provided. The battery pack includes the secondary battery according to the approach.

According to another approach, a vehicle is provided. The vehicle includes the battery pack according to the approach.

According to another approach, a stationary power supply is provided. The stationary power supply includes the battery pack according to the approach.

According to the approach, there is provided electrode group that is excellent in low temperature characteristics and is hard to generate self-discharge, a secondary battery including the electrode group, a battery pack, a vehicle, and a stationary power supply.

The inventors of the present invention have found that when a self-supporting film formed by molding solid electrolyte particles or the like into a thin plate shape was used as a separator, low temperature characteristics of a secondary battery was improved as compared to a case in which a self-supporting film such as a nonwoven fabric or a porous film was used as a separator.

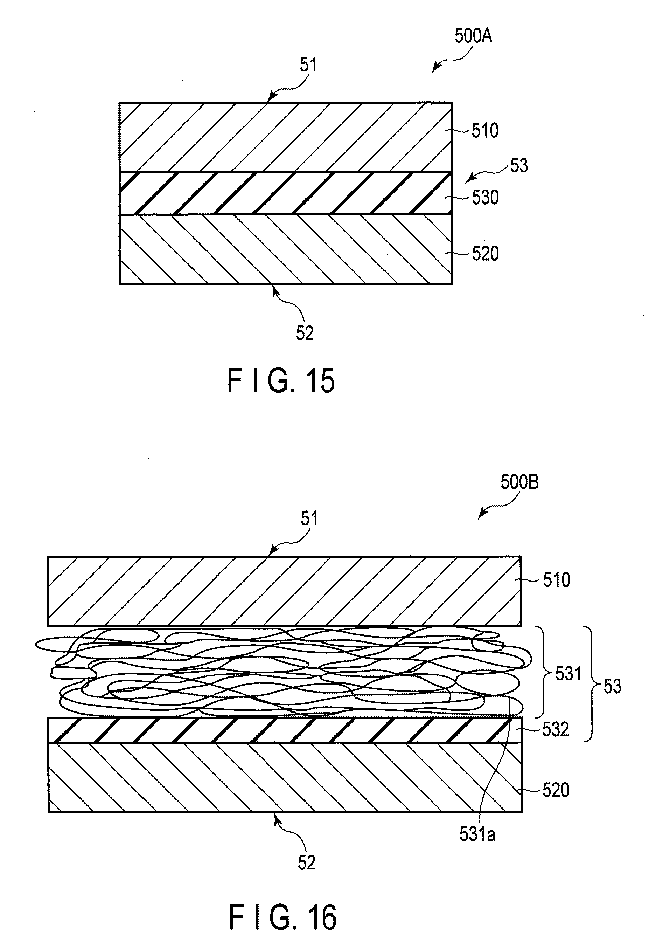

FIG. 15 is a cross-sectional view schematically showing an example of an electrode group using a self-supporting film made of a solid electrolyte layer as a separator. An electrode group 500A shown in FIG. 15 includes a positive electrode 51, a negative electrode 52, and a separator 53. The positive electrode 51 includes a positive electrode current collector (not shown) and a positive electrode active material-containing layer 510 provided on the positive electrode current collector. The negative electrode 52 includes a negative electrode current collector (not shown) and a negative electrode active material-containing layer 520 provided on the negative electrode current collector. The separator 53 is a self-supporting film 530 made of a solid electrolyte layer containing solid electrolyte particles. The self-supporting film 530 is positioned between the positive electrode active material-containing layer 510 and the negative electrode active material-containing layer 520 and is in contact with both the positive electrode active material-containing layer and the negative electrode active material-containing layer.

The electrode group 500A employing such a configuration is excellent in low temperature characteristics as compared to a case in which a self-supporting film such as a nonwoven fabric or a porous film is used as a separator. That is, the inventors of the present invention have found that when a configuration in which solid electrolyte particles and an active material-containing layer were in contact with each other, battery characteristics such as the discharge capacity of a secondary battery were improved, for example, in a low temperature environment of -40°C to -30°C. Although the reason for this is not clear, for example, the following can be considered. First, under the low temperature environment, the lithium ions in the vicinity of the active material are deficient due to a decrease in the diffusion property of the lithium ions, which may deteriorate the charge and discharge characteristics. In such a case, the lithium ions contained in the solid electrolyte can be released to the vicinity of the active material. This can supplement the lithium ion deficiency in the vicinity of the active material and can suppress the deterioration of the charge and discharge characteristics in the low temperature environment.

However, as described above, since the self-supporting film type separator needs the mechanical strength to some extent, it is difficult to decrease the film thickness. In addition, if the film thickness is made thin, there is a problem that an internal short circuit tends to occur. Furthermore, if a self-supporting film made of a solid electrolyte layer having a large film thickness is used as a separator, the internal resistance of the secondary battery also increases.

To solve such a problem, it is considered to employ the configuration shown in FIG. 16. FIG. 16 is a cross-sectional view schematically showing an example of an electrode group using a laminate of a layer of organic fibers and a solid electrolyte film as a separator. The electrode group 500B shown in FIG. 16 has the configuration similar to the electrode group shown in FIG. 15, except that a laminate of a layer of organic fibers 531 and a solid electrolyte layer 532 is used as a separator 53 in place of the self-supporting film 530 made of the solid electrolyte layer.

The solid electrolyte layer 532 is, for example, a non-self-supporting film formed by applying a slurry containing solid electrolyte particles on the main surface of the negative electrode active material-containing layer 520. The solid electrolyte layer 532 contains solid electrolyte particles and is in contact with the negative electrode active material-containing layer 520. The layer of organic fibers 531 is, for example, a non-self-supporting film formed by directly depositing the organic fiber 531a on the main surface of the solid electrolyte layer 532. The layer of organic fibers 531 is interposed between the solid electrolyte layer 532 and the positive electrode active material-containing layer 510 and is in contact with the positive electrode active material-containing layer 510.

Since the electrode group 500B employing such a configuration can increase the porosity of the layer of organic fibers 531, the low internal resistance can be realized. In addition, since the layer of organic fibers 531 and the solid electrolyte layer 532 are non-self-supporting films, the internal short circuit is unlikely to occur even when the thin film is formed.

However, the inventors of the present invention have found that even in such a secondary battery, there is also room for improvement in compatibility between the low temperature characteristics and the difficulty of occurrence of an internal short circuit.

[First Approach]

According to a first approach, an electrode group is provided. The electrode group includes a positive electrode, a negative electrode, and a separator. The positive electrode includes a positive electrode active material-containing layer containing a positive electrode active material. The negative electrode includes a negative electrode active material-containing layer containing a negative electrode active material. The separator is positioned at least between the positive electrode and the negative electrode. The separator includes a layer of organic fibers, first solid electrolyte particles, and second solid electrolyte particles. The layer of organic fibers includes organic fibers. The first solid electrolyte particles are in contact with the organic fibers and the positive electrode active material-containing layer. The second solid electrolyte particles are in contact with the organic fibers and the negative electrode active material-containing layer.

The separator included in the electrode group according to the first approach includes the layer of organic fibers, the first solid electrolyte particles in contact with the negative electrode active material-containing layer, and the second solid electrolyte particles in contact with the positive electrode active material-containing layer. That is, in the electrode group according to the first approach, the solid electrolyte particles included in the separator are in contact with the positive electrode active material-containing layer and the negative electrode active material-containing layer, respectively. In the case of employing such a configuration, it is possible to improve the low temperature characteristics as in the case of using the self-supporting film made of the solid electrolyte layer as the separator. In addition, since the electrode group according to the first approach includes the layer of organic fibers in the separator, self-discharge hardly occurs and the low internal resistance can be realized. From the above, the secondary battery including the electrode group according to the first approach is excellent in low temperature characteristics and self-discharge hardly occurs. In addition, the secondary battery including the electrode group according to the first approach is less likely to cause the internal short circuit.

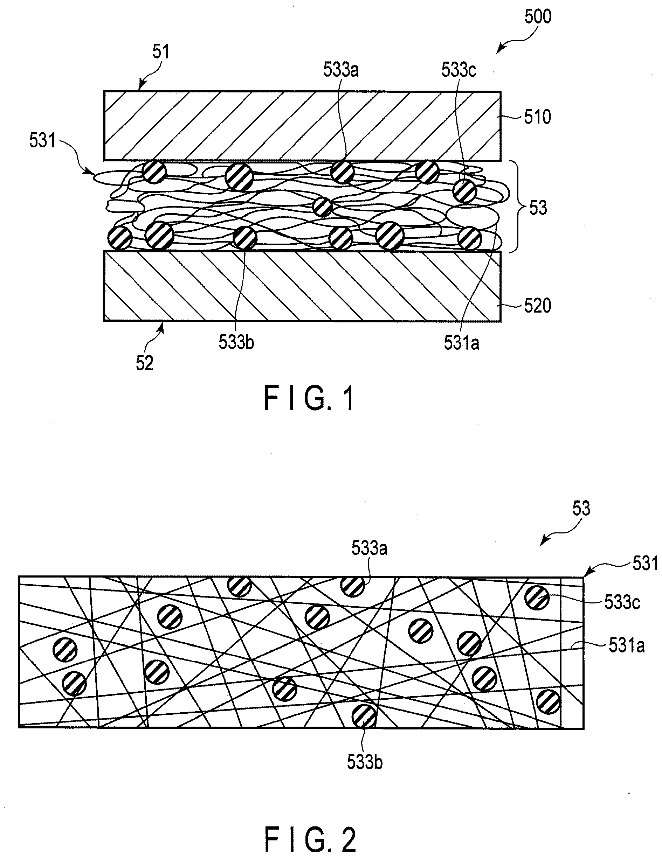

FIG. 1 is a cross-sectional view schematically showing an example of the electrode group according to the first approach. The electrode group 500 shown in FIG. 1 has the configuration similar to the electrode group shown in FIG. 15, except that a layer of organic fibers 531 supporting solid electrolyte particles is used as a separator 53 in place of the self-supporting film 530 made of the solid electrolyte layer.

The separator 53 shown in FIG. 1 includes a layer of organic fibers 531 and a plurality of solid electrolyte particles 533 supported on the layer of organic fibers 531. The solid electrolyte particles 533 include first solid electrolyte particles 533a in contact with the positive electrode active material-containing layer 510, second solid electrolyte particles 533b in contact with the negative electrode active material-containing layer 520, and third solid electrolyte particles 533c which are not in contact with any of the positive electrode active material-containing layer 510 and the negative electrode active material-containing layer 520 and are positioned inside the layer of organic fibers 531.

Details of the negative electrode, the positive electrode, and the separator, which are included in the electrode group according to the first approach, will be described below.

(Negative Electrode)

The negative electrode can include a negative electrode current collector and a negative electrode active material-containing layer. The negative electrode active material-containing layer can be formed on one surface or both of reverse surfaces of the negative electrode current collector. The negative electrode active material-containing layer can include a negative electrode active material, and optionally a conductive agent and a binder.

The negative electrode current collector is a material which is electrochemically stable at the insertion and extraction potentials of lithium ions of the negative electrode active material. For example, the negative electrode current collector is preferably made of copper, nickel, stainless, aluminum, or an aluminum alloy containing one or more elements selected from Mg, Ti, Zn, Mn, Fe, Cu, and Si. The thickness of the current collector is preferably 5 $\mu$m to 20 $\mu$m. The current collector having such a thickness can achieve a balance between the strength and reduction in weight of the electrode.

The current collector can include a portion on one side where the negative electrode active material-containing layer is not carried on any surfaces. This portion acts as a negative electrode current collector tab.

As the negative electrode active material, it is preferable to use a compound whose lithium ion insertion/extraction potential is 1 V (vs. Li/Li$^+$) to 3 V (vs. Li/Li$^+$) with respect to a potential based on metallic lithium.

Examples of the negative electrode active material include a lithium titanate having a ramsdellite structure (for example, $Li_{2+y}Ti_3O_7$ ($0 \leq y \leq 3$), a lithium titanate having a spinel structure (for example, $Li_{4+x}Ti_5O_{12}$ ($0 \leq x \leq 3$)), monoclinic titanium dioxide ($TiO_2$), anatase type titanium dioxide, rutile type titanium dioxide, a hollandite type titanium composite oxide, an orthorhombic titanium composite oxide, and a monoclinic niobium-titanium composite oxide. The lithium ion insertion/extraction potential of these negative electrode active materials is 1 V (vs. Li/Li$^+$) to 3 V (vs. Li/Li$^+$) with respect to a potential based on metallic lithium.

Examples of the orthorhombic titanium composite oxide include a compound represented by a general formula of $Li_{2+a}M(I)_{2-b}Ti_{6-c}M(II)_dO_{14+\sigma}$. M(I) is at least one element selected from the group consisting of Sr, Ba, Ca, Mg, Na, Cs, Rb, and K. M(II) is at least one element selected from the group consisting of Zr, Sn, V, Nb, Ta, Mo, W, Y, Fe, Co, Cr, Mn, Ni, and Al. In the general formula, $0 \leq a \leq 6$, $0 \leq b < 2$, $0 \leq c < 6$, $0 \leq d < 6$, $-0.5 \leq \delta \leq 0.5$. Specific examples of the orthorhombic titanium composite oxide include $Li_{2+a}Na_2Ti_6O_{14}$ ($0 \leq a \leq 6$).

Examples of the monoclinic niobium-titanium composite oxide include a compound represented by a general formula $Li_xTi_{1-y}M1_yNb_{2-z}M2_zO_{7\pm\sigma}$. M1 is at least one element selected from the group consisting of Zr, Si, and Sn. M2 is at least one element selected from the group consisting of V, Ta, and Bi. In the general formula, $0 \leq x \leq 5$, $0 \leq y < 1$, $0 \leq z < 2$, $-0.3 \leq \delta \leq 0.3$. Specific examples of the monoclinic niobium-titanium composite oxide include $Li_xNb_2TiO_7$ ($0 \leq x \leq 5$).

Other examples of the monoclinic niobium-titanium composite oxide include a compound represented by a general formula $Ti_{1-y}M3_{y+z}Nb_{2-z}O_{7-\sigma}$. M3 is at least one element selected from the group consisting of Mg, Fe, Ni, Co, W, Ta and Mo. In the general formula, $0 \leq y < 1$, $0 \leq z < 2$, $-0.3 \leq \delta \leq 0.3$.

The primary particle size of the negative electrode active material is preferably within a range of from 1 nm to 1 $\mu$m. The negative electrode active material having a primary particle size of 1 nm or more is easy to handle during industrial production. In the negative electrode active material having a primary particle size of 1 $\mu$m or less, diffusion of lithium ions within solid can proceed smoothly.

The specific surface area of the negative electrode active material is preferably within a range of from 3 m$^2$/g to 200 m$^2$/g. The negative electrode active material having a specific surface area of 3 m$^2$/g or more can secure sufficient sites for inserting and extracting Li ions. The negative electrode active material having a specific surface area of 200 $m^2/g$ or less is easy to handle during industrial production, and can secure a good charge and discharge cycle performance.

The conductive agent is blended to improve current collection performance and to suppress the contact resistance between the active material and the current collector. Examples of the conductive agent include carbonaceous materials such as vapor grown carbon fiber (VGCF), acetylene black, carbon black, and graphite. One of these may be used as the conductive agent, or two or more thereof may be used in combination as the conductive agent. Alternatively, in place of using the conductive agent, a carbon coating or an electron conductive inorganic material coating may be applied to the surfaces of the active material particles.

The binder is blended to fill the gaps of the dispersed active material with the binder and also to bind the active material and the negative electrode current collector. Examples of the binder include polytetrafluoro ethylene (PTFE), polyvinylidene fluoride (PVdF), fluorine-containing rubber, styrene-butadiene rubber, a polyacrylic acid compound, an imide compound, carboxymethyl cellulose (CMC) and salts of the CMC. One of these may be used as the binder, or two or more thereof may be used in combination as the binder.

In the active material-containing layer, active material, binder, and conductive agent are preferably blended in proportions of 68% by mass to 96% by mass, 2% by mass to 30% by mass, and 2% by mass to 30% by mass, respectively. The content of the conductive agent of 2% by mass or more makes it possible to improve the current collection performance of the active material-containing layer. The amount of the binder of 2% by mass or more provides sufficient binding property between the active material-containing layer and the current collector, which can provide promising excellent cycle performance. On the other hand, the contents of the conductive agent and binder are preferably 30% by mass or less, thereby increasing the capacity.

The negative electrode may be produced by the following method, for example. First, an active material, a conductive agent, and a binder are suspended in a solvent to prepare a slurry. The slurry is applied onto one surface or both of reverse surfaces of a current collector. Next, the applied slurry is dried to form a layered stack of the active material-containing layer and the current collector. Then, the layered stack is subjected to pressing. The electrode can be produced in this manner.

Alternatively, the electrode may also be produced by the following method. First, an active material, a conductive agent, and a binder are mixed to obtain a mixture. Next, the mixture is formed into pellets. Then the electrode can be obtained by arranging the pellets on the current collector.

The density of the negative electrode active material-containing layer (the current collector is not included) is preferably 1.8 $g/cm^3$ to 2.8 $g/cm^3$. The negative electrode in which the density of the negative electrode active material-containing layer falls within this range is excellent in the energy density and the electrolyte holding properties. The density of the negative electrode active material-containing layer is more preferably 2.1 $g/cm^3$ to 2.6 $g/cm^3$.

(Positive Electrode)

The positive electrode may include a positive electrode current collector and a positive electrode active material-containing layer. The positive electrode active material-containing layer may be formed on one surface or both of reverse surfaces of the positive electrode current collector. The positive electrode active material-containing layer may include a positive electrode active material, and optionally an electro-conductive agent and a binder.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably within a range of from 5 $\mu$m to 20 $\mu$m, and more preferably 15 $\mu$m or less. The purity of the aluminum foil is preferably 99% by mass or more. The amount of transition metal such as iron, copper, nickel, or chromium contained in the aluminum foil or aluminum alloy foil is preferably 1% by mass or less.

The positive electrode current collector can include a portion on one side where the positive electrode active material-containing layer is not carried on any surfaces. This portion acts as a positive electrode current collector tab.

As the positive electrode active material, for example, an oxide or a sulfide may be used. The positive electrode may include one kind of positive electrode active material, or alternatively, include two or more kinds of positive electrode active materials. Examples of the oxide and sulfide include compounds capable of having Li (lithium) and Li ions be inserted and extracted.

Examples of such compounds include manganese dioxides ($MnO_2$), iron oxides, copper oxides, nickel oxides, lithium manganese composite oxides (e.g., $Li_xMn_2O4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y < 1$, and

$Li_xCoPO_4$; $0 < x \leq 1$), iron sulfates [$Fe_2(SO_4)_3$], vanadium oxides (e.g., $V_2O_5$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$).

More preferred examples of the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxides (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

When an room temperature molten salt is used as the nonaqueous electrolyte of the battery, preferred examples of the positive electrode active material include lithium iron phosphate, $Li_xVPO_4F$ ($0 \leq x \leq 1$), lithium manganese composite oxide, lithium nickel composite oxide, and lithium nickel cobalt composite oxide. Since these compounds have low reactivity with room temperature molten salts, cycle life can be improved. The room temperature molten salt will be described later in detail.

The primary particle size of the positive electrode active material is preferably within a range of from 100 nm to 1 $\mu$m. The positive electrode active material having a primary particle size of 100 nm or more is easy to handle during industrial production. In the positive electrode active material having a primary particle size of 1 $\mu$m or less, diffusion of lithium ions within solid can proceed smoothly.

The specific surface area of the positive electrode active material is preferably within a range of from 0.1 m$^2$/g to 10 m$^2$/g. The positive electrode active material having a specific surface area of 0.1 m$^2$/g or more can secure sufficient sites for inserting and extracting Li ions. The positive electrode active material having a specific surface area of 10 m$^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluorine rubber, polyacrylate compounds, imide compounds, carbokymethyl cellulose (CMC), and salts of the CMC. One of these may be used as the binder, or two or more may be used in combination as the binder.

The conductive agent is added to improve a current collection performance and to suppress the contact resistance between the active material and the current collector. Examples of the conductive agent include carbonaceous substances such as vapor grown carbon fiber (VGCF), acetylene black, carbon black, and graphite. One of these may be used as the conductive agent, or two or more may be used in combination as the conductive agent. The conductive agent may be omitted.

In the positive electrode active material containing layer, the positive electrode active material and the binder are preferably mixed at a ratio of 80 mass% to 98 mass% and a ratio of 2 mass% to 20 mass%, respectively.

When the amount of the binder is set to 2 mass% or more, a sufficient electrode strength can be obtained. In addition, the binder can function as an insulator. For this reason, when the amount of the binder is set to 20 mass% or less, the amount of the insulator contained in the electrode decreases, and therefore, the internal resistance can be reduced.

When adding the conductive agent, the positive electrode active material, the binder, and the conductive agent are preferably mixed at a ratio of 77 mass% to 95 mass%, a ratio of 2 mass% to 20 mass%, and a ratio of 3 mass% to 15 mass%, respectively.

When the amount of the conductive agent is set to 3 mass% or more, the above-described effect can be obtained. When the amount of the conductive agent is set to 15 mass% or less, the ratio of the conductive agent that comes into contact with the electrolyte can be lowered. If this ratio is low, the decomposition of the electrolyte can be reduced under high-temperature storage.

The positive electrode can be produced in accordance with, for example, the same procedure as that of the above-described negative electrode.

(Separator)

The separator is positioned at least between the positive electrode and the negative electrode. The separator is preferably in contact with both the positive electrode active material-containing layer and the negative electrode active material-containing layer. The separator includes a layer including organic fibers and a plurality of solid electrolyte particles.

The layer of organic fibers is an aggregate of organic fibers positioned between the positive electrode and the negative electrode. The layer of organic fibers is preferably a non-self-supporting film directly provided on the positive electrode active material-containing layer or the negative electrode active material-containing layer.

The thickness of the layer of organic fibers is, for example, 1 $\mu$m to 10 $\mu$m. When the thickness of the layer of organic fibers is within this range, there is a tendency to make compatibility between the difficulty of occurrence of an internal short circuit of the secondary battery and the low internal resistance. The thickness of the layer of organic fibers is preferably 2 $\mu$m to 5 $\mu$m.

The porosity of the layer of organic fibers is, for example, 30% to 80%. When the porosity is within this range, there is a tendency to make compatibility between the difficulty of occurrence of an internal short circuit of the secondary battery and the low internal resistance. The porosity of the layer of organic fibers is preferably 40% to 70%, and more preferably 50% to 70%. This porosity can be measured by, for example, mercury porosimetry.

The layer of organic fibers contains one or more organic fibers. The layer of organic fibers can have a three-dimensional reticulated structure in which one organic fiber or a plurality of organic fibers cross in a reticulated shape. The organic fibers may be in contact with at least one of the positive electrode active material-containing layer and the negative electrode active material-containing layer.

The organic fiber contains at least one organic material selected from the group consisting of, for example, polyamide-imide, polyamide, polyolefin, polyether, polyimide, polyketone, polysulfone, cellulose, polyvinyl alcohol (PVA), and polyvinylidene fluoride (PVdF). As the polyolefin, for example, polypropylene (PP), polyethylene (PE), or the like is usable. The polyimide and PVdF are generally said to be materials that can hardly change to fibers. When an electrospinning method to be described later is employed, such a material can also be changed to fibers to form a layer. One type or two or more types of organic fibers can be used. As the organic material, at least one of polyamide-imide and PVdF is preferably contained.

In the organic fiber, the sectional shape in a direction orthogonal to the longitudinal direction is not particularly limited. The sectional shape of the organic fiber can be circular, elliptic, or triangular. Alternatively, the sectional shape may be a polygonal shape with four or more vertices.

In the organic fiber, the average diameter of sections in the direction orthogonal to the longitudinal direction, that is, the thickness of the organic fiber preferably ranges from 10 nm to 500 nm. If the thickness of the organic fiber falls within this range, the ionic conductivity and the electrolyte impregnating ability of the separator tend to improve. The thickness of the organic fiber more preferably ranges from 30 nm to 400 nm. The thickness of the organic fiber can be measured by SEM (Scanning Electron Microscopy) observation.

The average length per organic fiber is, for example, 700 $\mu$m or more, and preferably 1 mm or more. If the length of the organic fiber is large, peeling of the active material-containing layer tends to more hardly occur. The length of the organic fiber does not particularly have an upper limit value. For example, the upper limit value of the length is 10 mm. The length of the organic fiber can be measured by SEM observation.

The mass of the layer of organic fibers per unit area of the active material-containing layer preferably ranges from 1 g/m$^2$ to 10 g/m$^2$ or less. If the mass of the layer of organic fibers per unit area falls within this range, the ionic conductivity and the electrolyte impregnating ability of the separator tend to improve. The mass of the layer of organic fibers per unit area more preferably ranges from 2 g/m$^2$ to 7 g/m$^2$. The mass of the organic fibers per unit area can be measured by SEM observation.

The separator includes first solid electrolyte particles in contact with the organic fibers and the positive electrode active material-containing layer, and second solid electrolyte particles in contact with the organic fibers and the negative electrode active material-containing layer. The first and second solid electrolyte particles may be supported by the organic fibers. The first solid electrolyte particles may be in contact with the negative electrode active material-containing layer in addition to the positive electrode active material-containing layer, and the second solid electrolyte particles may be in contact with the positive electrode active material-containing layer in addition to the negative electrode active material-containing layer. In addition, the separator may include third solid electrolyte particles that are not in contact with both the negative electrode and the positive electrode and are positioned inside the layer of organic fibers.

The fact that the first and second solid electrolyte particles are respectively in contact with the positive electrode active material-containing layer and the negative electrode active material-containing layer can be confirmed by, for example, the following method.

First, the battery is disassembled, and the electrode group is extracted. Next, a portion of a region except the ends of the electrode group is cut, and a test piece including a section of the electrode group in the thickness direction is obtained. Next, the test piece is set in an ion milling apparatus, and the section of the electrode group in the thickness direction is smoothly processed to obtain a processed surface. Then, to impart electron conductivity to the test piece, an electron conductive material is deposited on the section of the electrode group in the thickness direction by vapor deposition or sputtering, thereby obtaining an observation surface. As the electron conductive material, for example, carbon or a metal such as palladium or a gold palladium alloy can be used.

Next, it can be confirmed that the first and second solid electrolyte particles and the positive electrode and negative electrode active material-containing layers are in contact with each other by observing the observation surface with SEM (Scanning Electron Microscopy) observation.

The first to third solid electrolyte particles may be of the same type, or may be of different types. The first to third solid electrolyte particles preferably have lithium ion conductivity. The lithium ion conductivity of the first to third solid electrolyte particles is preferably $1 \times 10^{-5}$ s/cm or more.

The lithium ion conductivity of the first to third solid electrolyte particles can be measured by, for example, an AC impedance method. More specifically, first, the inorganic solid particles are molded using a tablet forming device, thereby obtaining a green compact. Next, gold (Au) is deposited on both surfaces of the green compact, thereby obtaining a measurement sample. Then, the AC impedance of the measurement sample is measured using an impedance measuring device. As the measuring device, for example, the frequency response analyzer 1260 available from Solartron can be used. The measurement is performed under an argon atmosphere by setting the measurement frequency to 5 Hz to 32 MHz and the measurement temperature to 25°C.

Next, a complex impedance plot is created based on the measured AC impedance. In the complex impedance plot, a real component is plotted along the abscissa, and an imaginary component is plotted along the ordinate. Next, an ionic conductivity $\sigma_{Li}$ of the inorganic solid particles is calculated by the following formula. In the following formula, $Z_{Li}$ is a resistance value calculated from the diameter of the arc of the complex impedance plot, S is the area of the measurement sample, and d is the thickness of the measurement sample.

$$\sigma_{Li} = (1 / Z_{Li}) \times (d / S)$$

As the first to third solid electrolyte particles, for example, an oxide-based solid electrolyte can be used. As the oxide-based solid electrolyte, a lithium phosphate solid electrolyte having a NASICON (Sodium (Na) Super Ionic Conductor) structure and represented by a general formula $LiM_2(PO_4)_3$ is preferably used. M in the formula is at least one element selected from the group consisting of, for example, titanium (Ti), germanium (Ge), strontium (Sr), zirconium (Zr), tin (Sn), aluminum (Al), and calcium (Ca). The ionic conductivity of the lithium phosphate solid electrolyte represented by the general formula $LiM_2(PO_4)_3$ is, for example, $1 \times 10^{-5}$ S/cm to $1 \times 10^{-3}$ S/cm.

Detailed examples of the lithium phosphate solid electrolyte having the NASICON structure include LATP ($Li_{1+x}Al_xTi_{2-x}(PO_4)_3$), $Li_{1+x}Al_xGe_{2-x}(PO_4)_3$, $Li_{1+x}Al_xZr_{2-x}(PO_4)_3$, and LZCP ($Li_{1+2x}Zr_{2-x}Ca_x(PO_4)_3$). In the above formula, the range of x is greater than 0 and less than or equal to 1. LATP and LZCP are preferably used as solid electrolyte particles because of their high waterproofness and low reducibility and cost. LZCP is, for example, $Li_{1.2}Zr_{1.9}Ca_{0.1}P_3O_{12}$.

Examples of the oxide-based solid electrolyte other than the lithium phosphate solid electrolyte include LIPON ($Li_{2.9}PO_{3.3}N_{0.46}$) in an amorphous state, $La_{5+x}A_xLa_{3-x}M_2O_{12}$ (A is Ca, Sr, or Ba, and M is Nb and/or Ta) having a garnet structure, $Li_3M_{2-x}L_2O_{12}$ (M is Ta and/or Nb, and L is Zr), $Li_{7-3x}Al_xLa_3Zr_3O_{12}$, and LLZ ($Li_7La_3Zr_2O_{12}$). The solid electrolyte may be of one type, or two or more types may be used in mixture. The ionic conductivity of LIPON is, for example, $1 \times 10^{-6}$ S/cm to $5 \times 10^{-6}$ S/cm. The ionic conductivity of LLZ is, for example, $1 \times 10^{-4}$ S/cm to $5 \times 10^{-4}$ S/cm.

The shape of the first to third solid electrolyte particles is not particularly limited. They can have, for example, a spherical shape, an elliptical shape, a flat shape, or a fibrous shape.

The average particle size of the first to third solid electrolyte particles is preferably 15 $\mu$m or less, and more preferably 12 $\mu$m or less. If the average particle size of the inorganic solid particles is small, the resistance in the battery tends to be low.

The average particle size of the first to third solid electrolyte particles is preferably 0.1 $\mu$m or more, and more preferably 1 $\mu$m or more. If the average particle size of the inorganic solid particles is large, the agglomeration of particles tends to be suppressed.

The average particle size of the first to third solid electrolyte particles means a particle size with which a volume integrated value becomes 50% in a particle size distribution obtained by a laser diffraction particle size distribution measuring apparatus. As a sample used when performing the particle size distribution measurement, a dispersion obtained by diluting the solid electrolyte particles by ethanol such that the concentration becomes 0.01 mass% to 5 mass% is used. Note that the average particle size of the first to third solid electrolyte particles may be calculated by SEM observation of the observation surface described above.

The average particle size of the first to third solid electrolyte particles may be equal. FIG. 2 is an enlarged cross-sectional view showing a portion of the separator shown in FIG. 1. The first solid electrolyte particles 533a, the second solid electrolyte particles 533b, and the third solid electrolyte particles 533c, which are included in the separator 53 shown in FIG. 2, have the same average particle size.

In addition, the average particle size of the first solid electrolyte particles and the average particle size of the second solid electrolyte particles may be different from each other.

When the separator has the third solid electrolyte particles, the average particle size of the third solid electrolyte particles may be different from the average particle size of the first and second solid electrolyte particles.

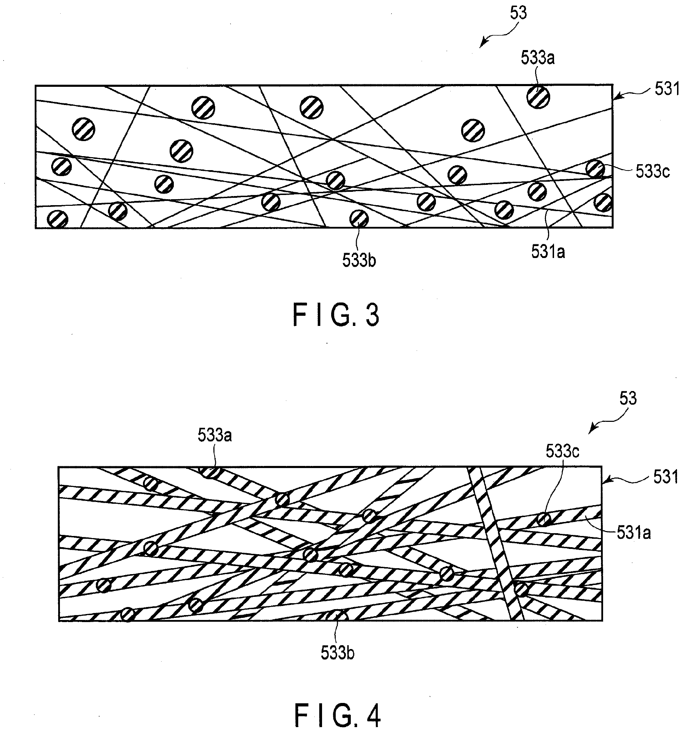

FIG. 3 is an enlarged cross-sectional view showing a portion of another example of the separator shown in FIG. 1. The average particle size of the first solid electrolyte particles 533a included in the separator 53 shown in FIG.

3 is larger than the average particle size of the second solid electrolyte particles 533b. In addition, the average particle size of the third solid electrolyte particles 533c is smaller than the average particle size of the first solid electrolyte particles 533a and larger than the average particle size of the second solid electrolyte particles 533b.

In addition, the existence ratio of the first solid electrolyte particles and the existence ratio of the second solid electrolyte particles may be identical to or different from each other. The existence ratio of the first and second solid electrolyte particles can be calculated by, for example, the following method. First, the SEM photograph of the observation surface above described is divided into three regions, that is, a region including the first solid electrolyte particles, a region including the second solid electrolyte particles, and a region not including any of the first and second solid electrolyte particles. Next, the proportions occupied by the sections of the first and second solid electrolyte particles in the region including the first and second solid electrolyte particles are respectively calculated using image analysis software or the like. This operation is performed at three different positions of the electrode group, and the average value thereof is regarded as the existence ratio of the first and second solid electrolyte particles.

In the separator, the total content of the first to third solid electrolyte particles is preferably 5 mass% or more, and more preferably 20 mass% or more. When the total content of the first to third solid electrolyte particles is large, the low temperature characteristics become better.

The total content of the solid electrolyte particles in the separator is preferably 80 mass% or less, and more preferably 60 mass% or less. When the content of the inorganic solid particles is small, the mass of the separator can be lowered, the mass energy density of the battery can be increased, and the weight reduction can be achieved.

The film thickness of the separator is preferably 20 $\mu$m or less, and more preferably 10 $\mu$m or less. When the film thickness of the separator is small, the energy density of the battery can be increased. In addition, the film thickness of the separator is preferably 3 $\mu$m or more, and more preferably 5 $\mu$m or more. When the separator has a large film thickness, the internal short circuit tends to be less likely to occur.

The film thickness of the separator can be obtained by, for example, the following method. First, regarding the SEM image of the section of the electrode group in the thickness direction, which is obtained by the above-mentioned method, the thickness of the portion related to the separator is measured. This measurement is performed on SEM images obtained at arbitrary five positions of the electrode group, and the average value of these is regarded as the film thickness of the separator.

The separator may contain a binder or an inorganic material in addition to the layer of organic fibers and the solid electrolyte particles.

The binder has a function of binding the solid electrolyte particles to the layer of organic fibers. As the binder, the material similar to that used in the electrode described above can be used. The content of the binder in the separator preferably falls within range of 1 mass% to 10 mass%.

As the inorganic material, an insulator and a dielectric material or the like can be used. The inorganic material is, for example, titanium oxide, titanium hydroxide, barium titanate, alumina, iron oxide, silicon oxide, aluminum hydroxide, gibbsite, boehmite, bayerite, magnesium oxide, silica, zirconium oxide, magnesium hydroxide, silica, barium titanate, lithium tetraborate, lithium tantalate, mica, silicon nitride, aluminum nitride, and zeolite. As the inorganic material, only one kind of compound may be used, or a mixture of two or more kinds of compounds may be used.

The separator can be manufactured by, for example, the following method.

First, a negative electrode is prepared, as described above. Next, a layer of organic fibers is formed on the negative electrode. More specifically, the above-described organic material is dissolved in an organic solvent to prepare a raw material solution. As the organic solvent, an arbitrary solvent such as dimethylacetamide (DMAc), dimethyl sulfoxide (DMSO), N,N-dimethylformamide (DMF), N-methylpyrrolidone (NMP), water, or alcohol can be used. The concentration of the organic fibers in the raw material solution falls within the range of, for example, 5 mass% to 60 mass%.

Next, the raw material solution is applied to the surface of the negative electrode by the electrospinning method, thereby directly forming the layer of organic fibers. More specifically, an electrospinning apparatus is prepared. The electrospinning apparatus includes a spinning nozzle, a high voltage generator configured to apply a voltage to the spinning nozzle, and a metering pump that supplies the raw material solution to the spinning nozzle. Next, the raw material solution is emitted from the spinning nozzle toward the surface of the electrode while applying a voltage to the spinning nozzle using the high voltage generator. Accordingly, a string-shaped organic fiber accumulates on the surface of the electrode, and the layer of organic fibers is formed.

In the electrospinning method, the applied voltage is appropriately determined in accordance with the solvent/solute species, the boiling point/vapor pressure curve of the solvent, the solution concentration, the temperature, the nozzle shape, the sample-nozzle distance, and the like. The electric potential difference between the nozzle and the work is set to, for example, 0.1 kV to 100 kV. The supply rate of the raw material solution is also appropriately determined in accordance with the solution concentration, the solution viscosity, the temperature, the pressure, the applied voltage, the nozzle shape, and the like. If the nozzle shape is a syringe type, the supply rate is set to, for example, 0.1 $\mu$l/min to 500 $\mu$l/min per nozzle. If the nozzle shape is a multiple nozzle or a slit, the supply rate can be determined in accordance with the opening area. Note that the layer of organic fibers may be formed using an inkjet method, a jet dispenser method, a spray coating method, or the like. In addition, when the active material-containing layers are provided on both surfaces of the current collector, the layer of organic fibers may be provided on each of the active material-containing layers.

Next, a slurry containing solid electrolyte particles is applied onto the layer of organic fibers. Specifically, first, solid electrolyte particles, a solvent, and optionally, a binder are mixed to obtain a dispersion. The concentration of the solid electrolyte particles in the dispersion is, for example, 10 mass% to 50 mass%. As the solvent, for example, dimethylacetamide (DMAc), dimethyl sulfoxide (DMSO), N,N-dimethylformamide (DMF), N-methylpyrrolidone (NMP), water or alcohol is used. Next, the dispersion is applied onto the layer of organic fibers. Note that if the liquidity of the dispersion is sufficiently high, the dispersion can be applied using a spray or micro gravure method.

In this case, a portion of the solid electrolyte particles contained in the dispersion is supported above the layer of organic fibers. When the electrode group is produced, the solid electrolyte particles become the first solid electrolyte particles in contact with the positive electrode active material-containing layer. In addition, another portion of the solid electrolyte particles contained in the dispersion passes through the layer of organic fibers, reaches the negative electrode active material-containing layer, and becomes the second solid electrolyte particles. Note that in a case in which the layer of organic fibers is provided on both the active material-containing layers, the dispersion containing the solid electrolyte particles may be applied onto each layer of organic fibers.

Next, the layer of organic fibers after the application of the slurry containing the solid electrolyte particles is dried, thereby obtaining a negative electrode-integrated type separator. The thus obtained negative electrode integrated type separator may be subjected to press processing. When press processing is performed, the adhesion between the active material-containing layer and the layer of organic fibers and the adhesion between the organic fibers and the solid electrolyte particles can be increased. Note that the pressing processing may be performed before the application of the slurry containing the solid electrolyte particles. Although the negative electrode is described herein as an example, the separator may be provided on the positive electrode.

The average particle size or the existence ratio of the first and second solid electrolyte particles can be adjusted by appropriately changing, for example, the porosity of the layer of organic fibers, the average particle size and the type of the solid electrolyte particles contained in the slurry, the solvent, the condition of the press processing, and the like.

The separator included in the electrode group according to the first approach described above includes the layer of organic fibers, the first solid electrolyte particles in contact with the positive electrode active material-containing layer, and the second solid electrolyte particles in contact with the negative electrode active material-containing layer. Therefore, the secondary battery including the electrode group according to the first approach is excellent in low temperature characteristics and self-discharge hardly occurs.

Various modifications are possible for the above-described separator.

FIG. 4 is an enlarged cross-sectional view showing a portion of a separator according to a first modification. In the separator 53 shown in FIG. 4, at least a portion of each of first to third solid electrolyte particles is included inside an organic fiber 531a. When a layer of organic fibers containing organic fibers in which solid electrolyte particles are embedded is used as the separator, the separator can be formed only by an electrospinning method, and thus the production efficiency tends to increase.

The separator shown in FIG. 4 can be obtained by, for example, the following method. First, a negative electrode is prepared in accordance with the procedure similar to that described above. Next, a layer of organic fibers is formed on the negative electrode. Specifically, first, the above-described organic material is dissolved in an organic solvent to prepare a raw material solution. The concentration of the organic material in the raw material solution falls within the range of, for example, 10 mass% to 50 mass%. Next, solid electrolyte particles are dispersed in the raw material solution to obtain a mixed solution. The concentration of the solid electrolyte particles in the mixed solution falls within the range of, for example, 5 mass% to 50 mass%.

Next, a layer of organic fibers is formed on the negative electrode active material-containing layer in accordance with the procedure similar to the above-described method of forming the layer of organic fiber layers, except that the mixed solution is used in place of the raw material solution. Therefore, it is possible to obtain a negative electrode-integrated type separator consisting of the layer of organic fibers including the second solid electrolyte particles which is in contact with the negative electrode active material-containing layer and a portion of which is included in the organic fibers and the solid electrolyte particles which is positioned at the outermost surface portion of the layer of organic fibers and a portion of which is included in the organic fibers. Note that the negative electrode-integrated separator may be subjected to press processing. When the electrode group is produced, the solid electrolyte particles positioned at the outermost surface portion of the layer of organic fibers become the first solid electrolyte particles in contact with the positive electrode active material-containing layer.

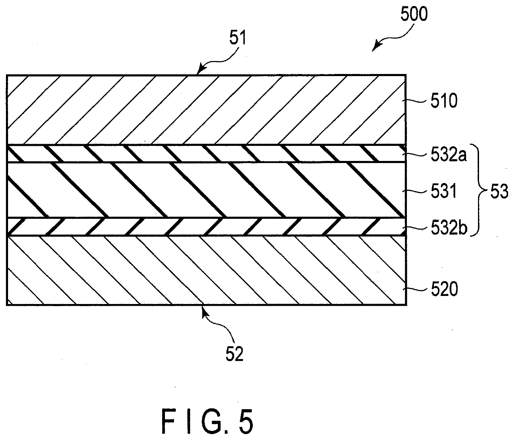

FIG. 5 is a cross-sectional view schematically showing an example of an electrode group including a separator according to a second modification. Instead of using the laminate of the layer of organic fibers 531 and the solid electrolyte layer 532 as the separator 53, the electrode group 500 shown in FIG. 5 has the configuration similar to the electrode group 500B shown in FIG. 16, except that a laminate having a three-layer structure of a first solid electrolyte layer 532a, a layer of organic fibers 531, and a second solid electrolyte layer 532b is used.

The first solid electrolyte layer 532a contains first solid electrolyte particles and is in contact with a positive electrode active material-containing layer 510. The second solid electrolyte layer 532b contains second solid electrolyte particles and is in contact with a negative electrode active material-containing layer 520. The layer of organic fibers 531 is positioned between the first and second solid electrolyte layers and is in contact with the first and second solid electrolyte layers.

The thickness of the first solid electrolyte layer 532a is preferably, for example, 2 $\mu$m to 10 $\mu$m. When the thickness of the first solid electrolyte layer 532a is within this range, it is possible to make compatibility between the difficulty of occurrence of an internal short circuit and the low internal resistance. The thickness of the second solid electrolyte layer 532b may be identical to or different from the thickness of the first solid electrolyte layer 532a.

When the configuration shown in FIG. 5 is employed, the contact surface between the solid electrolyte and the active material is large, and thus the low temperature characteristics tend to become better.

The separator shown in FIG. 5 can be obtained by, for example, the following method. First, solid electrolyte particles, a binder, and a solvent are mixed to obtain a slurry. The concentration of the solid electrolyte particles in the slurry is, for example, 10 mass% to 50 mass%, and the concentration of the binder is, for example, 1 mass% to 10 mass%. As the binder, the materials similar to those contained in the negative electrode and the positive electrode described above can be used. As the solvent, for example, dimethylacetamide (DMAc), dimethyl sulfoxide (DMSO), N, N-dimethylformamide (DMF), N-methylpyrrolidone (NMP), water or alcohol is used.

Next, the slurry is applied onto the positive electrode active material-containing layer, and the coating is dried to obtain a first solid electrolyte layer. In addition, the slurry is applied onto the negative electrode active material-containing layer, and the coating is dried to obtain a second solid electrolyte layer. Note that the slurry for forming the second solid electrolyte layer may be different from the slurry for forming the first solid electrolyte layer in the type, the average particle size, the concentration, and the like of the solid electrolyte particles contained therein.

Next, a layer of organic fibers is provided on the second solid electrolyte layer in accordance with the procedure similar to that described above. In this manner, a negative electrode structure including the negative electrode, the second solid electrolyte layer, and the layer of organic fibers is obtained. Note that the layer of organic fibers containing the solid electrolyte particles shown in FIG. 4 may be provided as the layer of organic fibers. In addition, when the negative electrode active material-containing layer is provided on both surfaces of the negative electrode current collector, the second solid electrolyte layer and the layer of organic fibers may be provided on each negative electrode active material-containing layer.

Next, the electrode group shown in FIG. 5 can be obtained by laminating the positive electrode on the negative electrode structure such that the layer of organic fibers and the first solid electrolyte layer are in contact with each other.

Note that the first solid electrolyte layer may be provided by applying the slurry not onto the positive electrode active material-containing layer but onto the layer of organic fibers. That is, first, the negative electrode structure of the negative electrode, the second solid electrolyte layer, and the layer of organic fibers is obtained in accordance with the procedure similar to that described above. Next, a slurry containing solid electrolyte particles, a binder, and a solvent is applied onto the layer of organic fibers to form a solid electrolyte layer. The types of the solid electrolyte, the binder, and the solvent, which are contained in the slurry, may be identical to or different from those of the slurry for forming the second solid electrolyte layer. Next, the electrode group shown in FIG. 5 can be obtained by laminating the positive electrode on the negative electrode structure such that the positive electrode active material-containing layer and the solid electrolyte layer provided on the layer of organic fibers are in contact with each other.

[Second Approach]

According to the second approach, a secondary battery including the electrode group according to the first approach and an electrolyte is provided.

In addition, the secondary battery according to the second approach can further include a container member that stores the electrode group and the electrolyte.

Furthermore, the secondary battery according to the second approach can further include a negative electrode terminal electrically connected to a negative electrode and a positive electrode terminal electrically connected to a positive electrode.

The secondary battery according to the second approach may be, for example, a lithium ion secondary battery. In addition, the secondary battery can be a nonaqueous electrolyte secondary battery including a nonaqueous electrolyte and an aqueous electrolyte secondary battery including an aqueous electrolyte.

The electrolyte, the container member, the negative electrode terminal, and the positive electrode terminal will be described below in detail.

(Electrolyte)

As the electrolyte, for example, a liquid nonaqueous electrolyte or a gel nonaqueous electrolyte can be used. The liquid nonaqueous electrolyte is prepared by dissolving an electrolyte salt serving as a solute in an organic solvent. The concentration of the electrolyte salt is preferably 0.5 mol/L to 2.5 mol/L.

Examples of the electrolyte salt include lithium salts such as lithium perchlorate ($LiClO_4$), lithium hexafluoro-phosphate ($LiPF_6$), lithium tetrafluoroborate ($LiBF_4$), hexafluoride arsenic lithium ($LiAsF_6$), lithium trifluoromethanesul-fonate ($LiCF_3SO_3$), and lithium bis(trifluoromethanesulfonimide) ($LiN(CF_3SO_2)_2$), and a mixture thereof. The electrolyte salt is preferably hardly oxidized at a high potential, and $LiPF_6$ is most preferable.

Examples of the organic solvent include cyclic carbonates such as propylene carbonate (PC), ethylene carbonate (EC), and vinylene carbonate (VC), chain carbonates such as diethyl carbonate (DEC), dimethyl carbonate (DMC), and methyl ethyl carbonate (MEC), cyclic ethers such as tetrahydrofuran (THF), 2-methyl tetrahydrofuran (2MeTHF), and dioxolane (DOX), chain ethers such as dimethoxy ethane (DME) and diethoxy ethane (DEE), γ-butyrolactone (GBL), acetonitrile (AN), and sulfolane (SL). These organic solvents can be used alone or a solvent mixture.

The gel nonaqueous electrolyte is prepared by compounding a liquid nonaqueous electrolyte and a polymeric material. As the gel nonaqueous electrolyte, the same substance as the above-described ion conductive polymer can be used.

Alternatively, as the nonaqueous electrolyte, a room temperature molten salt (ionic melt) containing lithium ions, a solid polyelectrolyte, an inorganic solid electrolyte, and the like may be used, in addition to the liquid nonaqueous electrolyte and the gel nonaqueous electrolyte.

In addition, the electrolyte may be an aqueous electrolyte. The aqueous electrolyte contains an aqueous solvent and an electrolyte salt. The aqueous electrolyte may be a liquid. The liquid aqueous electrolyte is prepared by dissolving the electrolyte salt serving as a solute in an aqueous solvent. As the electrolyte salt, the same electrolyte as described above can be used.

As the aqueous solvent, a solution containing water can be used. Here, the solution containing water may be pure water or a solvent mixture of water and an organic solvent.

The room temperature molten salt (ionic melt) represents a compound that can exist as a liquid at room temperature (15°C to 25°) in organic salts each made of a combination of organic cations and anions. The room temperature molten salt includes a room temperature molten salt that exists a liquid alone, a room temperature molten salt that changes to a liquid when it is mixed with an electrolyte salt, a room temperature molten salt that changes to a liquid when it is dissolved in an organic solvent, and a mixture thereof. In general, the melting point of a room temperature molten salt used in a secondary battery is 25°C or less. In addition, the organic cations generally have a quaternary ammonium skeleton.

The solid polyelectrolyte is prepared by dissolving an electrolyte salt in a polymeric material and solidifying.

The inorganic solid electrolyte is a solid substance having lithium ion conductivity.

(Container Member)

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal case is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), square, cylinder, coin, or button-shaped. The container member can appropriately be selected based on the size of the battery and use of the battery.

(Negative electrode Terminal)

The negative electrode terminal may be made of a material that is electrochemically stable at the potential at which Li is inserted into and extracted from the above-described negative electrode active material, and has electrical conductivity. Specific examples of the material for the negative electrode terminal include copper, nickel, stainless steel, aluminum, and aluminum alloy containing at least one element selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance with the negative electrode current collector.

(Positive Electrode Terminal)

The positive electrode terminal may be made of, for example, a material that is electrically stable in the potential range of 3 V to 4.5 V (vs. Li/Li$^+$) relative to the oxidation-and-reduction potential of lithium, and has electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance with the positive electrode current collector.

Next, the secondary battery according to the second approach will be more specifically described with reference to the drawings.

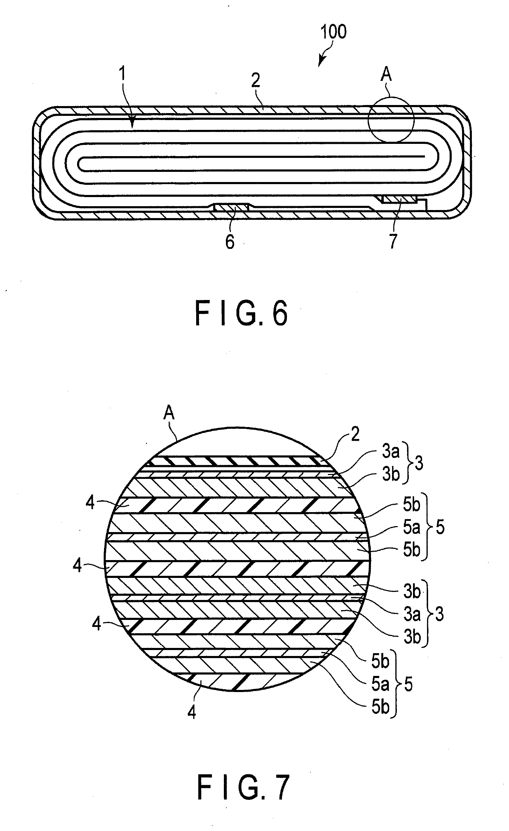

FIG. 6 is a cross-sectional view schematically showing an example of a secondary battery according to the second approach. FIG. 7 is an enlarged cross-sectional view of section A of the secondary battery shown in FIG. 6.

The secondary battery 100 shown in FIGS. 6 and 7 includes a bag-shaped container member 2 shown in FIG. 6, an electrode group 1 shown in FIGS. 6 and 7, and an electrolyte, which is not shown. The electrode group 1 and the electrolyte are housed in the bag-shaped container member 2. The electrolyte (not shown) is held in the electrode group 1.

The bag shaped container member 2 is made of a laminate film including two resin layers and a metal layer sandwiched between the resin layers.

As shown in FIG. 6, the electrode group 1 is a wound electrode group in a flat form. The wound electrode group 1 in a flat form includes a negative electrode 3, a separator 4, and a positive electrode 5, as shown in FIG. 7. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 7. For the other portions of the negative electrode 3, negative electrode active material-containing layers 3b are formed on both of reverse surfaces of the negative electrode current collector 3a.

The positive electrode 5 includes a positive electrode current collector 5a and positive electrode active material-containing layers 5b formed on both of reverse surfaces of the positive electrode current collector 5a.

As shown in FIG. 6, a negative electrode terminal 6 and positive electrode terminal 7 are positioned in vicinity of the outer peripheral edge of the wound electrode group 1. The negative electrode terminal 6 is connected to a portion of the negative electrode current collector 3a of the negative electrode 3 positioned outermost. The positive electrode terminal 7 is connected to the positive electrode current collector 5a of the positive electrode 5 positioned outermost. The negative electrode terminal 6 and the positive electrode terminal 7 extend out from an opening of the bag-shaped container member 2. The bag-shaped container member 2 is heat-sealed by a thermoplastic resin layer arranged on the interior thereof.

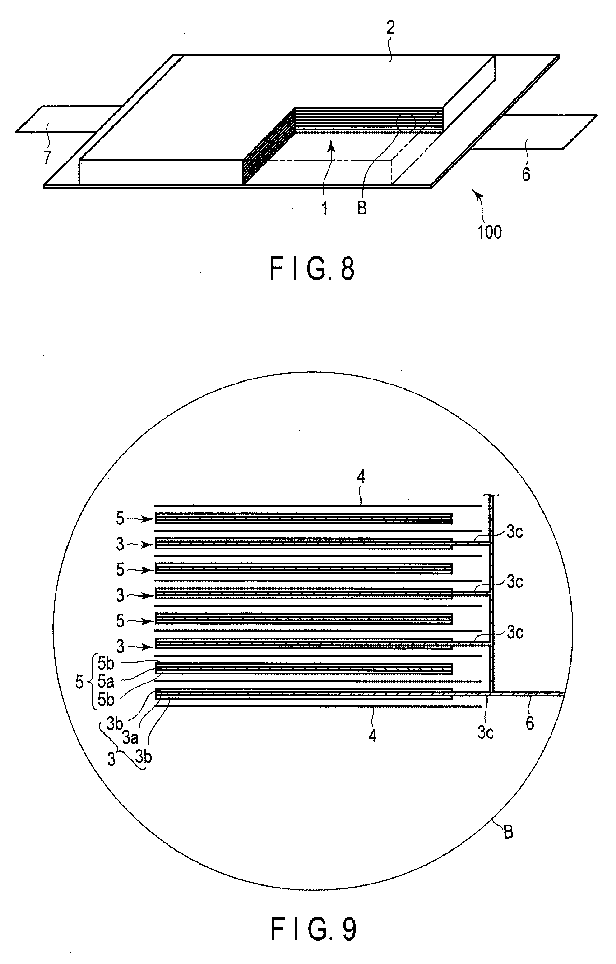

The secondary battery according to the second approach is not limited to the secondary battery of the structure shown in FIGS. 6 and 7, and may be, for example, a battery of a structure as shown in FIGS. 8 and 9.

FIG. 8 is a partially cut-out perspective view schematically showing another example of a secondary battery according to the second approach. FIG. 9 is an enlarged cross-sectional view of section B of the secondary battery shown in FIG. 8.

The secondary battery 100 shown in FIGS. 8 and 9 includes an electrode group 1 shown in FIGS. 8 and 9, a container member 2 shown in FIG. 8, and an electrolyte, which is not shown. The electrode group 1 and the electrolyte are housed in the container member 2. The electrolyte is held in the electrode group 1.

The container member 2 is made of a laminate film including two resin layers and a metal layer sandwiched between the resin layers.

As shown in FIG. 9, the electrode group 1 is a stacked electrode group. The stacked electrode group 1 has a structure in which positive electrodes 3 and negative electrodes 5 are alternately stacked with separator(s) 4 sandwiched therebetween.

The electrode group 1 includes a plurality of the negative electrodes 3. Each of the negative electrodes 3 includes the negative electrode current collector 3a and the negative electrode active material-containing layers 3b supported on both surfaces of the negative electrode current collector 3a. The electrode group 1 further includes a plurality of the positive electrodes 5. Each of the positive electrodes 5 includes the positive electrode current collector 5a and the positive electrode active material-containing layers 5b supported on both surfaces of the positive electrode current collector 5a.

The negative electrode current collector 3a of each of the negative electrodes 3 includes at its side a portion 3c where the negative electrode active material-containing layer 3b is not supported on any surface. This portion 3c serves as a negative electrode tab. As shown in FIG. 9, the portion 3c serving as the negative electrode tab does not overlap the positive electrode 5. A plurality of the negative electrode tabs (portions 3c) are electrically connected to the belt-like negative electrode terminal 6. A leading end of the belt-like negative electrode terminal 6 is drawn to the outside from a container member 2.

Although not shown, the positive electrode current collector 5a of each of the positive electrodes 5 includes at its side a portion where the positive electrode active material-containing layer 5b is not supported on any surface. This portion serves as a positive electrode tab. Like the negative electrode tab (portion 3 c), the positive electrode tab does not overlap the negative electrode 3. Further, the positive electrode tab is located on the opposite side of the electrode group 1 with respect to the negative electrode tab (portion 3c). The positive electrode tab is electrically connected to the belt-like positive electrode terminal 7. A leading end of the belt-like positive electrode terminal 7 is located on the opposite side of the negative electrode terminal 6 and drawn to the outside from the container member 2.

The secondary battery according to the second approach includes the electrode group according to the first approach. Therefore, the secondary battery according to the second approach is excellent in low temperature characteristics and hardly causes an internal short circuit.

[Third Approach]

According to a third approach, a battery module is provided. The battery module according to the third approach includes plural secondary batteries according to the second approach.

In the battery module according to the third approach, each of the single batteries may be arranged electrically connected in series, in parallel, or in a combination of in-series connection and in-parallel connection.

An example of the battery module according to the third approach will be described next with reference to the drawings.

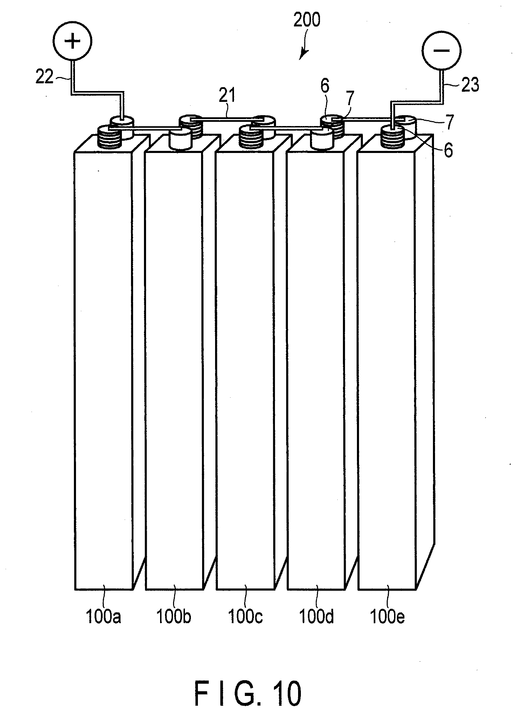

FIG. 10 is a perspective view schematically showing an example of the battery module according to the third approach. A battery module 200 shown in FIG. 10 includes five single-batteries 100a to 100e, four bus bars 21, a positive electrode-side lead 22, and a negative electrode-side lead 23. Each of the five single-batteries 100a to 100e is a secondary battery according to the second approach.

For example, a bus bar 21 connects a negative electrode terminal 6 of one single-battery 100a and a positive electrode terminal 7 of the single-battery 100b positioned adjacent. The five single-batteries 100 are thus connected in series by the four bus bars 21. That is, the battery module 200 shown in FIG. 10 is a battery module of five in-series connection.

As shown in FIG. 10, the positive electrode terminal 7 of the single-battery 100a located at one end on the left among the row of the five single-batteries 100a to 100e is connected to the positive electrode-side lead 22 for external connection. In addition, the negative electrode terminal 6 of the single-battery 100e located at the other end on the right among the row of the five single-batteries 100a to 100e is connected to the negative electrode-side lead 23 for external connection.

The battery module according to the third approach includes the secondary battery according to the second approach. Therefore, the battery module according to the third approach is excellent in low temperature characteristics and safety.

[Fourth Approach]

According to a fourth approach, a battery pack is provided. The battery pack includes a battery module according to the third approach. The battery pack may include a single secondary battery according to the second approach, in place of the battery module according to the third approach.

The battery pack according to the fourth approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the fourth approach may further comprise an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the fourth approach will be described with reference to the drawings.

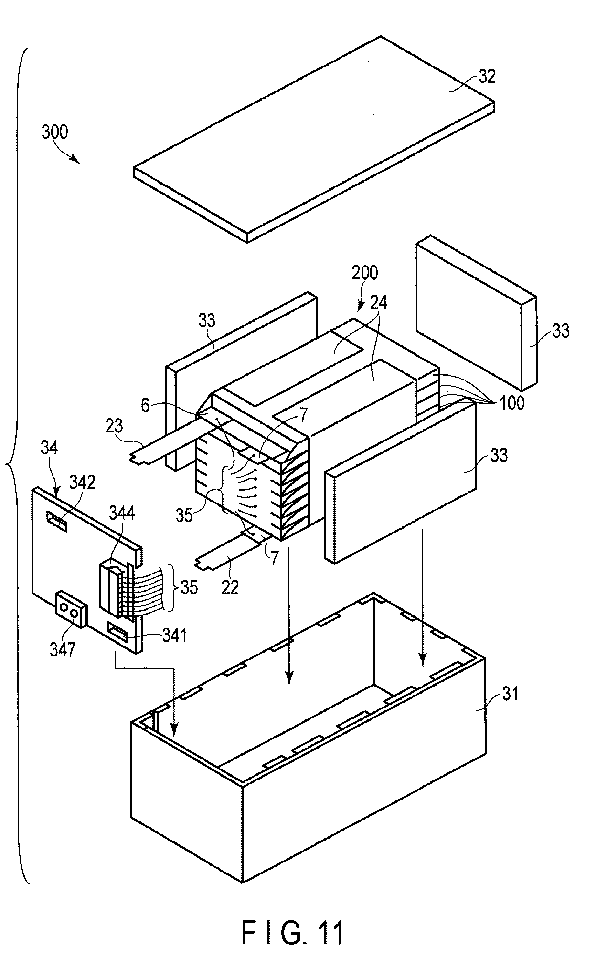

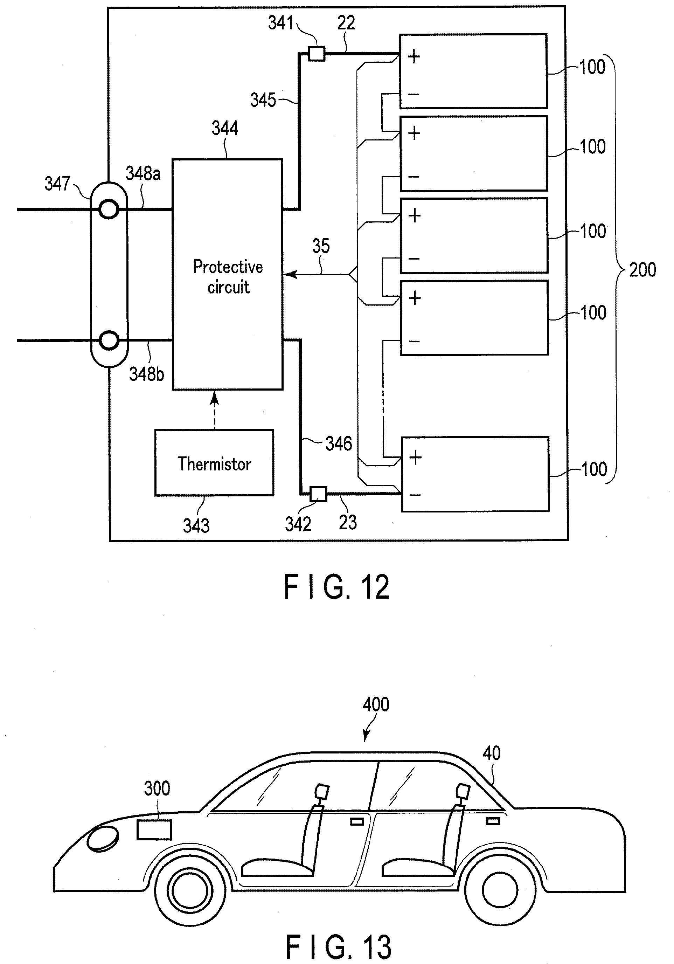

FIG. 11 is an exploded perspective view schematically showing an example of the battery pack according to the fourth approach. FIG. 12 is a block diagram showing an example of an electric circuit of the battery pack shown in FIG. 11.

A battery pack 300 shown in FIGS. 11 and 12 includes a housing container 31, a lid 32, protective sheets 33, a battery module 200, a printed wiring board 34, wires 35, and an insulating plate (not shown).

The housing container 31 shown in FIG. 11 is a square bottomed container having a rectangular bottom surface. The housing container 31 is configured to be capable of storing the protective sheets 33, the battery module 200, the printed wiring board 34, and the wires 35. The lid 32 has a rectangular shape. The lid 32 covers the housing container 31 to store the battery module 200 and so on. The housing container 31 and the lid 32 are provided with openings, connection terminals, or the like (not shown) for connection to an external device or the like.

The battery module 200 includes plural single-batteries 100, a positive electrode-side lead 22, a negative electrode-side lead 23, and an adhesive tape 24.

A single-battery 100 has a structure shown in FIGS. 8 and 9. At least one of the plural single-batteries 100 is a secondary battery according to the second approach. The plural single-batteries 100 are stacked such that the negative electrode terminals 6 and the positive electrode terminals 7, which extend outside, are directed toward the same direction. The plural single-batteries 100 are electrically connected in series, as shown in FIG. 12. The plural single-batteries 100 may alternatively be electrically connected in parallel, or connected in a combination of in-series connection and in-parallel connection. If the plural single-batteries 100 are connected in parallel, the battery capacity increases as compared to a case in which they are connected in series.

The adhesive tape 24 fastens the plural single-batteries 100. The plural single-batteries 100 may be fixed using a heat-shrinkable tape in place of the adhesive tape 24. In this case, the protective sheets 33 are arranged on both side surfaces of the battery module 200, and the heat-shrinkable tape is wound around the battery module 200 and protective sheets 33. After that, the heat-shrinkable tape is shrunk by heating to bundle the plural single-batteries 100.

One end of the positive electrode-side lead 22 is connected to the positive electrode terminal 7 of the single-battery 100 located lowermost in the stack of the single-batteries 100. One end of the negative electrode-side lead 23 is connected to the negative electrode terminal 6 of the single-battery 100 located uppermost in the stack of the single-batteries 100.

A printed wiring board 34 is disposed on the one inner surface along the short-side direction of inner surfaces of the housing container 31. The printed wiring board 34 includes a positive electrode-side connector 341, a negative electrode-side connector 342, a thermistor 343, a protective circuit 344, wirings 345 and 346, an external power distribution terminal 347, a plus-side (positive-side) wire 348a, and a minus-side (negative-side) wire 348b. One main surface of the printed wiring board 34 faces the surface of the battery module 200 from which the negative electrode terminals 6 and the positive electrode terminals 7 extend out. An insulating plate (not shown) is disposed in between the printed wiring board 34 and the battery module 200.

The positive electrode-side connector 341 is provided with a through-hole. By inserting the other end of the positive electrode-side lead 22 into the though-hole, the positive electrode-side connector 341 and the positive electrode-side lead 22 become electrically connected. The negative electrode-side connector 342 is provided with a through-hole. By inserting the other end of the negative electrode-side lead 23 into the though-hole, the negative electrode-side connector 342 and the negative electrode-side lead 23 become electrically connected.

The thermistor 343 is fixed to one main surface of the printed wiring board 34. The thermistor 343 detects the temperature of each single-battery 100 and transmits detection signals to the protective circuit 344.

The external power distribution terminal 347 is fixed to the other main surface of the printed wiring board 34. The external power distribution terminal 347 is electrically connected to device(s) that exists outside the battery pack 300.

The protective circuit 344 is fixed to the other main surface of the printed wiring board 34. The protective circuit 344 is connected to the external power distribution terminal 347 via the plus-side wire 348a. The protective circuit 344 is connected to the external power distribution terminal 347 via the minus-side wire 348b. In addition, the protective circuit 344 is electrically connected to the positive electrode-side connector 341 via the wiring 345. The protective circuit 344 is electrically connected to the negative electrode-side connector 342 via the wiring 346. Furthermore, the protective circuit 344 is electrically connected to each of the plural single-batteries 100 via the wires 35.

The protective sheets 33 are arranged on both inner surfaces of the housing container 31 along the long-side direction and on the inner surface along the short-side direction, facing the printed wiring board 34 across the battery module 200 positioned therebetween. The protective sheets 33 are made of, for example, resin or rubber.

The protective circuit 344 controls charge and discharge of the plural single-batteries 100. The protective circuit 344 is also configured to cut-off electric connection between the protective circuit 344 and the external power distribution terminal 347 to external devices, based on detection signals transmitted from the thermistor 343 or detection signals transmitted from each single-battery 100 or the battery module 200.

An example of the detection signal transmitted from the thermistor 343 is a signal indicating that the temperature of the single-battery (single-batteries) 100 is detected to be a predetermined temperature or more. An example of the detection signal transmitted from each single-battery 100 or the battery module 200 is a signal indicating detection of over-charge, over-discharge, and overcurrent of the single-battery (single-batteries) 100. When detecting over-charge or the like for each of the single batteries 100, the battery voltage may be detected, or a positive electrode potential or negative electrode potential may be detected. In the latter case, a lithium electrode to be used as a reference electrode may be inserted into each single battery 100.

Note that, as the protective circuit 344, a circuit included in a device (for example, an electronic device or an automobile) that uses the battery pack 300 as a power source may be used.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include several battery modules 200. In this case, the plural battery modules 200 may be connected in series, in parallel, or connected in a combination of in-series connection and in-parallel connection. The printed wiring board 34 and the wires 35 may be omitted. In this case, the positive electrode-side lead 22 and the negative electrode-side lead 23 may be used as the external power distribution terminal.

Such a battery pack 300 is used, for example, in applications where excellent cycle performance is demanded when a large current is extracted. More specifically, the battery pack 300 is used as, for example, a power source for electronic devices, a stationary battery, or an onboard battery for vehicles. An example of the electronic device is a digital camera. The battery pack 300 is particularly favorably used as an onboard battery.

The battery pack according to the fourth approach includes the secondary battery according to the second approach or the battery module according to the third approach. Therefore, the battery pack according to the fourth approach is excellent in low temperature characteristics and safety.

[Fifth Approach]

According to a fifth approach, a vehicle is provided. The battery pack according to the fourth approach is installed on this vehicle.

In the vehicle according to the fifth approach, the battery pack is configured, for example, to recover regenerative energy from motive force of the vehicle. The vehicle according to the fifth approach can include a mechanism configured to convert kinetic energy of the vehicle into regenerative energy.

Examples of the vehicle according to the fifth approach include two- to four-wheeled hybrid electric automobiles, two- to four-wheeled electric automobiles, electric assist bicycles, and railway cars.

In the vehicle according to the fifth approach, the installing position of the battery pack is not particularly limited. For example, the battery pack may be installed in the engine compartment of the vehicle, in rear parts of the vehicle, or under seats.

An example of the vehicle according to the fifth approach is explained below, with reference to the drawings.

FIG. 13 is a cross-sectional view schematically showing an example of a vehicle according to the fifth approach.

A vehicle 400, shown in FIG. 13 includes a vehicle body 40 and a battery pack 300 according to the fifth approach. In FIG. 13, the vehicle 400 is a four-wheeled automobile.

This vehicle 400 may have several battery packs 300 installed. In such a case, the battery packs 300 may be connected in series, connected in parallel, or connected in a combination of in-series connection and in-parallel connection.

An example is shown in FIG. 13, where the battery pack 300 is installed in an engine compartment located at the front of the vehicle body 40. As described above, the battery pack 300 may be installed, for example, in rear sections of the vehicle body 40, or under a seat. The battery pack 300 may be used as a power source of the vehicle 400. The battery pack 300 can also recover regenerative energy of power of the vehicle 400.

The vehicle according to the fifth approach is equipped with the battery pack according to the fourth approach. Therefore, the vehicle according to the fifth approach is excellent in traveling performance and safety.

[Sixth Approach]

According to a sixth approach, a stationary power supply is provided. The stationary power supply includes a battery pack according to the fourth approach. Note that instead of a battery pack according to the fourth approach, the stationary power supply may have a battery module according to the third approach or a secondary battery according to the second approach installed therein.

The stationary power supply according to the sixth approach includes a battery pack according to the fourth approach. Therefore, the stationary power supply according to the sixth approach is excellent in low temperature characteristics and safety.

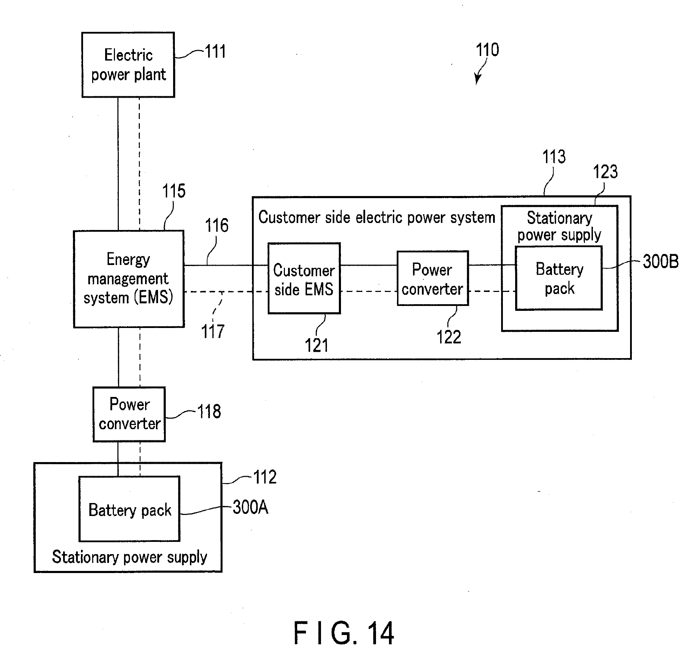

FIG. 14 is a block diagram showing an example of a system including a stationary power supply according to the sixth approach. FIG. 14 is a diagram showing an application example to stationary power supplies 112, 123 as an example of use of battery packs 300A, 300B according to the third approach. In the example shown in FIG. 14, a system 110 in which the stationary power supplies 112, 123 are used is shown. The system 110 includes an electric power plant 111, the stationary power supply 112, a customer side electric power system 113, and an energy management system (EMS) 115. Also, an electric power network 116 and a communication network 117 are formed in the system 110, and the electric power plant 111, the stationary power supply 112, the customer side electric power system 113 and the EMS 115 are connected via the electric power network 116 and the communication network 117. The EMS 115 performs control to stabilize the entire system 110 by utilizing the electric power network 116 and the communication network 117.

The electric power plant 111 generates a large amount of electric power from fuel sources such as thermal power or nuclear power. Electric power is supplied from the electric power plant 111 through the electric power network 116 and the like. In addition, the battery pack 300A is installed in the stationary power supply 112. The battery pack 300A can store electric power and the like supplied from the electric power plant 111. In addition, the stationary power supply 112 can supply the electric power stored in the battery pack 300A through the electric power network 116 and the like. The system 110 is provided with an electric power converter 118. The electric power converter 118 includes a converter, an inverter, a transformer and the like. Thus, the electric power converter 118 can perform conversion between direct current (DC) and alternate current (AC), conversion between alternate currents of frequencies different from each other, voltage transformation (step-up and step-down) and the like. Therefore, the electric power converter 118 can convert electric power from the electric power plant 111 into electric power that can be stored in the battery pack 300A.

The customer side electric power system 113 includes an electric power system for factories, an electric power system for buildings, an electric power system for home use and the like. The customer side electric power system 113 includes a customer side EMS 121, an electric power converter 122, and the stationary power supply 123. The battery pack 300B is installed in the stationary power supply 123. The customer side EMS 121 performs control to stabilize the customer side electric power system 113.

Electric power from the electric power plant 111 and electric power from the battery pack 300A are supplied to the customer side electric power system 113 through the electric power network 116. The battery pack 300B can store electric power supplied to the customer side electric power system 113. Similarly to the electric power converter 118, the electric power converter 122 includes a converter, an inverter, a transformer and the like. Thus, the electric power converter 122 can perform conversion between direct current and alternate current, conversion between alternate currents of frequencies different from each other, voltage transformation (step-up and step-down) and the like. Therefore, the electric power converter 122 can convert electric power supplied to the customer side electric power system 113 into electric power that can be stored in the battery pack 300B.

Note that the electric power stored in the battery pack 300B can be used, for example, for charging a vehicle such as an electric vehicle. Also, the system 110 may be provided with a natural energy source. In such a case, the natural energy source generates electric power by natural energy such as wind power and solar light. In addition to the electric power plant 111, electric power is also supplied from the natural energy source through the electric power network 116.

EXAMPLES

Examples of the present invention will be described below. The present invention is not limited to the examples to be described below.

<Example 1>

(Production of Positive Electrode)

A positive electrode was produced in the following way.

First, a positive electrode active material, a conductive agent, and a binder were dispersed in a solvent to prepare a slurry. The ratios of the positive electrode active material, the conductive agent, and the binder were 93 mass%, 5 mass%, and 2 mass%, respectively. As the positive electrode active material, a lithium nickel cobalt manganese composite oxide ($LiNi_{0.5}Co_{0.2}Mn_{0.3}O_2$) was used. As the conductive agent, a mixture of acetylene black and carbon black was used. The mass ratio of acetylene black and carbon black in the mixture was 2 : 1. As the binder, polyvinylidene fluoride (PVdF) was used. As the solvent, N-methylpyrrolidone (NMP) was used.

Next, the prepared slurry was applied to both surfaces of a positive electrode current collector, and the coatings were dried, thereby forming a positive electrode active material-containing layer. As the positive electrode current collector, an aluminum alloy foil having a thickness of 12 $\mu$m was used. Next, the positive electrode current collector and the positive electrode active material-containing layer were pressed, thereby producing a positive electrode. Hereinafter, the positive electrode is referred to as a positive electrode PE1.

(Production of Negative Electrode)

A negative electrode was produced in the following way.

First, a negative electrode active material, a conductive agent, and a binder were dispersed in a solvent to prepare a slurry. The ratios of the negative electrode active material, the conductive agent, and the binder were 95 mass%, 3 mass%, and 2 mass%, respectively. As the negative electrode active material, lithium titanium oxide LTO ($Li_4Ti_3O_{12}$) powder was used. The lithium ion insertion/extraction potential of the lithium titanium oxide was 1.5 V (vs. Li/Li$^+$) to 1.7 V (vs. Li/Li$^+$). As the conductive agent, a mixture of acetylene black and carbon black was used. The mass ratio of acetylene black and carbon black in the mixture was 2 : 1. As the binder, PVdF was used. As the solvent, NMP was used.

Next, the obtained slurry was applied to both surfaces of a negative electrode current collector, and the coatings were dried, thereby forming a negative electrode active material containing layer. As the negative electrode current collector, an aluminum alloy foil having a thickness of 12 $\mu$m was used. Next, the negative electrode current collector and the negative electrode active material-containing layer were pressed, thereby obtaining a negative electrode. Hereinafter, the negative electrode is referred to as NE1.

(Production of Separator)

First, a second solid electrolyte layer was formed on each negative electrode active material-containing layer of the negative electrode NE1. Specifically, first, solid electrolyte particles LATP ($Li_2O$-$Al_2O_3$-$SiO_2$-$P_2O_5$-$TiO_2$), PVdF, and NMP were mixed to prepare a slurry. Hereinafter, the slurry is referred to as a slurry SL1. The mass ratio of LATP and PVdF in the slurry SL1 was 100 : 1. The average particle size of LATP was 1 $\mu$m. In addition, the electron conductivity of LATP was 1 $\times$ 10$^{-4}$ S/cm. The slurry SL1 was applied onto one active material-containing layer of the negative electrode NE1 by a microgravure method, and the coating was dried to remove the solvent, thereby forming a second solid electrolyte layer. Next, a second solid electrolyte layer was formed on the other negative electrode active material-containing layer in accordance with the similar procedure. The average film thickness of the second solid electrolyte layer was approximately 3 $\mu$m.

Next, a layer of organic fibers was formed on each second solid electrolyte layer. Specifically, first, a raw material solution was prepared by dissolving polyimide in dimethylacetamide. The concentration of polyimide in the raw material solution was 80 mass%. Next, a voltage of 30 kV was applied to a spinning nozzle of an electrospinning apparatus using a high voltage generator. Next, the raw material solution was supplied to the spinning nozzle using a metering pump, and the raw material solution was emitted from the spinning nozzle toward the surface of the negative electrode on which one second solid electrolyte layer was formed. A layer of organic fibers was formed on the surface of the negative electrode by moving the spinning nozzle on the surface of the negative electrode. Next, a layer of organic fibers was formed on the surface of the negative electrode, on which the other second solid electrolyte layer was formed, in accordance with the similar procedure. Next, the negative electrode provided with the layer of organic fibers was pressed to obtain a negative electrode structure. The film thickness of the layer of organic fibers after the pressing was 3 $\mu$m. In addition, the average diameter of the organic fibers was 1 pm, and the mass of the layer of organic fibers per unit area was 2.7 g/m$^2$. Hereinafter, the negative electrode structure is referred to as a negative electrode structure NS1.

Next, a first solid electrolyte layer was formed on each layer of organic fibers of the negative electrode structure NS1. Specifically, first, solid electrolyte particles LATP ($Li_2O$-$Al_2O_3$-$SiO_2$-$P_2O_5$-$TiO_2$), carboxymethyl cellulose, and water were mixed to prepare a slurry. Hereinafter, the slurry is referred to as a slurry SL2. The mass ratio of LATP and carboxymethyl cellulose in the slurry SL2 was 100 : 1. Next, the slurry SL2 was applied onto one layer of organic fibers by a microgravure method, and the coating was dried to remove the solvent, thereby forming a first solid electrolyte layer. Next, a first solid electrolyte layer was formed on the other layer of organic fibers in accordance with the similar procedure. The average film thickness of the first solid electrolyte layer was approximately 3 $\mu$m.

In this manner, a negative electrode structure in which a non-self-supporting film type separator having a three-layer structure of the first solid electrolyte layer, the layer of organic fibers, and the second solid electrolyte layer was provided on each negative electrode active material-containing layer was obtained. Hereinafter, the negative electrode structure is referred to as a negative electrode structure NS2.

(Production of Nonaqueous Electrolyte)

An electrolyte salt was dissolved in an organic solvent, thereby obtaining a liquid nonaqueous electrolyte. As the electrolyte salt, $LiPF_6$ was used. The mol concentration of $LiPF_6$ in the nonaqueous electrolyte was 12 mol/L. As the organic solvent, a solvent mixture of propylene carbonate (PC) and diethyl carbonate (DEC) was used. The volume ratio of PC and DEC was 1 : 2.

(Production of Secondary Battery)

First, a laminated body was obtained by laminating a positive electrode and a negative electrode structure NS2 such that the first solid electrolyte layer and the positive electrode active material-containing layer were in contact with each other. Next, the laminated body was spirally wound to prepare an electrode group. The electrode group was hot pressed to prepare a flat electrode group. The obtained electrode group was stored in a thin metal can. Next, a liquid nonaqueous electrolyte was poured in the above described metal can container storing the electrode group, thereby preparing a secondary battery.

<Example 2>

First, a negative electrode NE1 and a positive electrode PE1 were prepared in accordance with the procedure similar to that described in Example 1. Next, a raw material solution for electrospinning was prepared in accordance with the procedure similar to that described in Example 1. Next, LATP used in Example 1 was added to the raw material solution and sufficiently stirred to obtain a mixed solution. The concentration of LATP in the mixed solution was 20 mass%. Next, a layer of organic fibers containing organic fibers containing LATP particles was provided on each negative electrode active material-containing layer in accordance with the procedure similar to that described in Example 1, except that the mixed solution was used in place of the raw material solution and the the mass of the layer of organic fibers per unit area was changed from 2.7 $g/m^2$ to 8.8 $g/m^2$. The film thickness of the layer of organic fibers after the pressing was 5 $\mu$m. In addition, the average diameter of the organic fibers was 1 $\mu$m. In this manner, a negative electrode structure in which the layer of organic fibers was provided on each negative electrode active material-containing layer was obtained. Hereinafter, the negative electrode structure is referred to as a negative electrode structure NS3.

Next, a laminated body was obtained by laminating the positive electrode PE1 and the negative electrode structure NS3 such that the layer of organic fibers and the positive electrode active material-containing layer were in contact with each other. A secondary battery was produced in accordance with the procedure similar to that described in Example 1, except that the laminated body was used.

<Example 3>

First, a negative electrode structure NS1 and a positive electrode PE1 were prepared in accordance with the procedure similar to that described in Example 1. Next, the slurry SL2 was applied onto the positive electrode active material-containing layer provided on one side of the positive electrode current collector by a microgravure method, and the coating was dried to remove the solvent, thereby forming a first solid electrolyte layer. Next, a first solid electrolyte layer was formed on the positive electrode active material-containing layer provided on the other side of the positive electrode current collector in accordance with the similar procedure to obtain a positive electrode structure. The average film thickness of the first solid electrolyte layer was approximately 3 $\mu$m. Hereinafter, the positive electrode structure is referred to as a positive electrode structure PS1.

Next, a laminated body was obtained by laminating the negative electrode structure NS1 and the positive electrode structure PS1 such that the first solid electrolyte layer and the layer of organic fibers were in contact with each other. A secondary battery was obtained in accordance with the procedure similar to that described in Example 1, except that the laminated body was used.

<Example 4>

A secondary battery was produced in accordance with the procedure similar to that described in Example 1, except that the type of the solid electrolyte particles contained in the slurries SL1 and SL2 was changed from LATP to LZCP ($Li_{1.2}Zr_{1.9}Ca_{0.1}P_3O_{12}$). The average particle size of the LZCP particles was 1 $\mu$m. In addition, the electron conductivity of the LZCP particles was $3 \times 10^{-4}$ S/cm.

<Comparative Example 1>

A negative electrode structure was obtained in accordance with the procedure similar to that described in Example 1, except that the mass of the layer of organic fibers per unit area was changed from 2.7 g/m$^2$ to 5.2 g/m$^2$, and the formation of the first solid electrolyte layer was omitted. Hereinafter, the negative electrode structure is referred to as a negative electrode structure NS4.

Next, a laminated body was obtained by laminating the negative electrode structure NS4 and the positive electrode PE1 such that the layer of organic fibers and the positive electrode active material-containing layer were in contact with each other. A secondary battery was obtained in accordance with the procedure similar to that described in Example 1, except that the laminated body was used.

<Comparative Example 2>

First, a separator made of a cellulosic nonwoven fabric was prepared. The film thickness of the nonwoven fabric was 15 $\mu$m. Next, a laminated body was obtained by laminating the positive electrode PE1, the separator, and the negative electrode NE1. A secondary battery was obtained in accordance with the procedure similar to that described in Example 1, except that the laminated body was used.

<Comparative Example 3>

A secondary battery was obtained in accordance with the procedure similar to that described in Example 1, except that alumina particles were used for the slurries SL1 and SL2, in place of the LATP particles. The average particle size of the alumina particles was 1 $\mu$m, and the insulating resistance was 10$^{14}$ $\Omega \cdot$cm or more.

<Comparative Example 4>

A negative electrode structure in which a layer of organic fibers was provided on each negative electrode active material-containing layer was obtained in accordance with the procedure similar to that described in Example 2, except that the addition of the LATP particles to the raw material solution was omitted and the mass of the layer of organic fibers per unit area was changed from 5.2 g/m$^2$ to 9.1 g/m$^2$. Hereinafter, the negative electrode structure is referred to as a negative electrode structure NS5.

Next, a laminated body was obtained by laminating the positive electrode PE1 and the negative electrode structure NS5 such that the layer of organic fibers and the positive electrode active material-containing layer were in contact with each other. A secondary battery was obtained in accordance with the procedure similar to that described in Example 1, except that the laminated body was used.

<Comparative Example 5>

The slurry SL1 was applied onto one active material-containing layer of the negative electrode NE1 by a microgravure method, and the coating was dried to remove the solvent, thereby forming a second solid electrolyte layer. Next, a second solid electrolyte layer was formed on the other negative electrode active material-containing layer in accordance with the similar procedure, thereby obtaining a negative electrode structure. The average film thickness of the second solid electrolyte layer was 10 $\mu$m. Hereinafter, the negative electrode structure is referred to as a negative electrode structure NS6.

Next, a laminated body was obtained by laminating the positive electrode PE1 and the negative electrode structure NS6 such that the second solid electrolyte layer and the positive electrode active material-containing layer were in contact with each other. A secondary battery was obtained in accordance with the procedure similar to that described in Example 1, except that the laminated body was used.

<Evaluation Method>

(Film Thickness of Separator)

For the solid electrolyte layers and the layers of organic fibers included in the separators according to Examples 1 to 4 and Comparative Examples 1 to 3 or 5, the film thickness was measured by the above described method. The result is shown in Table 1.

(Porosity)

For the layers of organic fibers included in the separators according to Examples 1 to 4 and Comparative Examples 1 to 3 or 5, the porosity was measured by the above described method. The result is shown in Table 1.

(Self-Discharge Rate)

For each of the secondary batteries according to Examples 1 to 4 and Comparative Examples 1 to 5, the self-discharge rate was measured. Specifically, first, each secondary battery was charged at a temperature of 25°C until the SOC (State Of Charge) became 100% and, after that, discharged until the SOC became 0%. Next, the battery after the discharge was charged until the SOC became 50%, and the battery voltage immediately after the charge was measured using a tester. The battery voltage at this time was defined as an initial voltage V. Next, the battery was left stand at the room temperature for seven days, and after that, the battery voltage was measured using a tester. The reduced voltage $\Delta V$ was calculated by subtracting the battery voltage at this time from the initial voltage V. Next, the self-discharge rate ($\Delta V/V \times 100$) was calculated by dividing the reduced voltage $\Delta V$ by the initial voltage V. The result is shown in Table 1.

(Low Temperature Characteristics)

For each of the secondary batteries according to Examples 1 to 4 and Comparative Examples 1 to 5, the discharge characteristics under the low temperature environment was measured. Specifically, first, the constant current charging was performed under an environment of 25°C on the secondary battery at a rate of 1 C until the SOC reached 100%. After that, the constant voltage charging was performed until the rate reached 1/20C. Next, the secondary battery was left stand for three hours under an environment of -40°C. After that, the battery was discharged at a rate of 0.2 C until the SOC reached 0%. The discharge capacity at this time was measured to obtain a discharge capacity W1.

Next, the secondary battery was charged again at a rate of 1 C at 25°C until the SOC reached 100%. After that, the constant voltage charging was performed until the rate reached 1/20C. Next, the secondary battery was discharged at a rate of 1 C at 25°C until the SOC reached 0%. The discharge capacity at this time was measured to obtain a discharge capacity W2. Next, the discharge capacity ratio (discharge capacity W1/discharge capacity W2 $\times$ 100) was calculated by dividing the discharge capacity W1 by discharge capacity W2. The result is shown in Table 1.

Table 1 summarizes the data according to Examples 1 to 4 and Comparative Examples 1 to 5.

[Table 1]

| | Inorganic particles | Second solid electrolyte layer | | Layer of organic fibers | | | | | First solid electrolyte layer | | Separator | Battery characteristics | |
|---|---|---|---|---|---|---|---|---|---|---|---|---|---|
| | Type | Position | Film thickness (μm) | Position | Film thickness (μm) | Solid electrolyte | mass (g/m²) | Porosity (%) | Position | Film thickness (μm) | Film thickness (μm) | self-discharge rate (%) | Discharge capacity ratio (%) |
| Example 1 | LATP | Negative electrode active material-containing layer | 3 | Second solid electrolyte layer | 3 | Absent | 2.7 | 65 | Layer of organic fibers | 3 | 9 | 2.5 | 15 |
| Example 2 | LATP | - | - | Negative electrode active material-containing layer | 5 | Present | 8.8 | 60 | - | - | 5 | 2.3 | 14 |
| Example 3 | LATP | Negative electrode active material-containing layer | 3 | Second solid electrolyte layer | 3 | Absent | 2.7 | 63 | Positive electrode active material-containing layer | 3 | 9 | 2.5 | 16 |
| Example 4 | LZCP | Negative electrode active material-containing layer | 3 | Second solid electrolyte layer | 3 | Absent | 2.7 | 63 | Layer of organic fibers | 3 | 9 | 2.6 | 14 |

(continued)

| | Inorganic particles | Second solid electrolyte layer | | Layer of organic fibers | | | | | First solid electrolyte layer | | Separator | Battery characteristics | |
|---|---|---|---|---|---|---|---|---|---|---|---|---|---|
| | Type | Position | Film thickness (μm) | Position | Film thickness (μm) | Solid electrolyte | mass (g/m$^2$) | Porosity (%) | Position | Film thickness (μm) | Film thickness (μm) | self-discharge rate (%) | Discharge capacity ratio (%) |
| Comparative Example 1 | LATP | Negative electrode active material-containing layer | 3 | Second solid electrolyte layer | 3 | Absent | 5.2 | 65 | - | - | 6 | 2.8 | 13 |
| Comparative Example 2 | - | - | - | - | - | - | - | - | - | - | 15 | 2.3 | 10 |
| Comparative Example 3 | Alumina | Negative electrode active material-containing layer | 3 | Second solid electrolyte layer | 3 | Absent | 2.7 | 60 | Layer of organic fibers | 3 | 9 | 2.4 | 3 |
| Comparative Example 4 | - | - | - | Negative electrode active material-containing layer | 5 | Absent | 9.1 | 61 | - | - | 5 | 2.3 | 9 |
| Comparative Example 5 | LATP | Negative electrode active material-containing layer | 10 | - | - | - | - | - | - | - | 10 | 12.4 | 15 |

In Table 1, in the columns under the heading "inorganic particles", a column with a notation "type" describes the type of each inorganic particle contained in the separator.

In addition, of columns under the heading "second solid electrolyte layer", a column with a notation "position" describes the layer applied with the slurry for forming the second solid electrolyte layer. In addition, a column with a notation "film thickness ($\mu$m)" describes the average film thickness of the second solid electrolyte layer.

In addition, of columns under the heading "layer of organic fibers", a column with a notation "position" describes the layer in which organic fibers for forming the layer of organic fibers was emitted. In addition, a column with a notation "film thickness ($\mu$m)" describes the average film thickness of the layer of organic fibers. In addition, a column with a notation "solid electrolyte" describes whether the solid electrolyte is included in the organic fiber. In addition, a column with a notation "mass (g/m$^2$)" describes the mass of the layer of organic fibers per unit area. In addition, a column with a notation "porosity (%)" describes the porosity of the layer of organic fibers.

In addition, of columns under the heading "first solid electrolyte layer", a column with a notation "position" describes the layer applied with the slurry for forming the first solid electrolyte layer. In addition, a column with a notation "film thickness ($\mu$m)" describes the average film thickness of the first solid electrolyte layer.

In addition, a column with a notation "film thickness ($\mu$m)" in the columns under the heading "separator" describes the sum of the film thickness of the second solid electrolyte layer, the film thickness of the layer of organic fibers, and the film thickness of the first solid electrolyte layer.

In addition, of columns under the heading "battery characteristics", a column with a notation "self-discharge rate (%)" describes the self-discharge rate obtained by dividing the reduced voltage $\Delta V$ by the initial voltage V. In addition, a column with a notation "discharge capacity ratio (%)" describes the discharge capacity ratio obtained by dividing the discharge capacity W1 by the discharge capacity W2.

As shown in Table 1, the secondary batteries according to Examples 1 to 4, including the first solid electrolyte particles, the second solid electrolyte particles, and the layer of organic fibers, had a low self-discharge rate and a high discharge capacity ratio under a low temperature environment.

On the other hand, the secondary battery according to Comparative Example 1, including the second solid electrolyte particles and the layer of organic fibers but not including the first solid electrolyte particles, had a high self-discharge rate and a low discharge capacity ratio under a low temperature environment.

In addition, the secondary battery according to Comparative Example 2 using the conventional cellulosic nonwoven fabric as the separator and the secondary battery according to Comparative Example 4 using only the layer of organic fibers as the separator had a low self-discharge rate, but had a low discharge capacity ratio under a low temperature environment.

In addition, the secondary battery according to Comparative Example 3 using alumina in place of the solid electrolyte particles had a low self-discharge rate, but had a remarkably low discharge capacity ratio under a low temperature environment.

In addition, the secondary battery according to Comparative Example 5 using the solid electrolyte layer as the separator without containing the layer of organic fibers had a high discharge capacity ratio under a low temperature environment, but also had a high self-discharge rate.

According to at least one approach described above, an electrode group is provided. The electrode group includes a positive electrode, a negative electrode, and a separator. The positive electrode includes a positive electrode active material-containing layer containing a positive electrode active material. The negative electrode includes a negative electrode active material-containing layer containing negative electrode active material. The separator is positioned at least between the positive electrode and the negative electrode. The separator includes a layer, first solid electrolyte particles, and second solid electrolyte particles. The layer includes organic fibers. The first solid electrolyte particles are in contact with the organic fibers and the positive electrode active material-containing layer. The second solid electrolyte particles are in contact with the organic fibers and the negative electrode active material-containing layer. Therefore, the secondary battery is excellent in low temperature characteristics and self-discharge hardly occurs.

**Claims**

1. An electrode group (500) comprising:

   a positive electrode (51) comprising a positive electrode active material-containing layer (510) containing a positive electrode active material;
   a negative electrode (52) comprising a negative electrode active material-containing layer (520) containing a negative electrode active material; and
   a separator (53) positioned at least between the positive electrode (51) and the negative electrode (52),
   wherein the separator (53) comprises a layer (531) including organic fibers (531a), first solid electrolyte particles

(533a) in contact with the organic fibers (531a) and the positive electrode active material-containing layer (510), second solid electrolyte particles (533b) in contact with the organic fibers (531a) and the negative electrode active material-containing layer (520), and third solid electrolyte particles (533c) which are not in contact with any of the positive electrode active material-containing layer (510) and the negative electrode active material-containing layer (520) and are positioned inside the layer (531) of organic fibers (531a).

2. The electrode group (500) according to claim 1, wherein at least a portion of the first and second solid electrolyte particles (533a, 533b) is included inside the organic fibers (531a).

3. The electrode group (500) according to claim 1 or 2, wherein a porosity of the layer (531) is from 30% to 80%.

4. The electrode group (500) according to any one of claims 1 to 3, wherein the organic fibers (531a) comprise a portion in contact with the positive electrode active material-containing layer (510) and a portion in contact with the negative electrode active material-containing layer (520).

5. The electrode group (500) according to any one of claims 1 to 4, wherein the separator (53) further comprises a first solid electrolyte layer (532a) positioned between the layer (531) and the positive electrode active material-containing layer (510) and including the first solid electrolyte particles (533a), and a second solid electrolyte layer (532b) positioned between the layer (531) and the negative electrode active material-containing layer (520) and including the second solid electrolyte particles (533b).

6. The electrode group (500) according to any one of claims 1 to 5, wherein the negative electrode active material comprises at least one compound selected from the group consisting of a lithium titanate having a ramsdellite structure, a lithium titanate having a spinel structure, a monoclinic titanium dioxide, an anatase type titanium dioxide, a rutile type titanium dioxide, a hollandite type titanium composite oxide, an orthorhombic titanium containing composite oxide, and a monoclinic niobium titanium composite oxide.

7. A secondary battery (100) comprising:

   the electrode group (500) according to any one of claims 1 to 6; and
   an electrolyte.

8. A battery pack (300) comprising the secondary battery (100) according to claim 7.

9. The battery pack (300) according to claim 8, further comprising:

   an external power distribution terminal (347); and
   a protective circuit (344).

10. The battery pack (300) according to claim 8 or 9, which includes a plurality of the secondary batteries (100), wherein the plurality of the secondary] batteries (100) are electrically connected in series, in parallel, or in combination of series and parallel.

11. A vehicle (400) comprising the battery pack (300) according to any one of claims 8 to 10.

12. A stationary power supply (110) comprising the battery pack (300) according to any one of claims 8 to 10.


**Patentansprüche**

1. Elektrodengruppe (500) umfassend:

   eine positive Elektrode (51), umfassend eine aktives Material der positiven Elektrode enthaltende Schicht (510), die ein aktives Material der positiven Elektrode enthält;
   eine negative Elektrode (52), umfassend eine aktives Material der negativen Elektrode enthaltende Schicht (520), die ein aktives Material der negativen Elektrode enthält; und
   einen Separator (53), der mindestens zwischen der positiven Elektrode (51) und der negativen Elektrode (52) positioniert ist,

wobei der Separator (53) eine Schicht (531) umfasst, die organische Fasern (531a), erste Festelektrolytpartikel (533a) in Kontakt mit den organischen Fasern (531a) und der das aktive Material der positiven Elektrode enthaltenden Schicht (510), zweite Festelektrolytpartikel (533b) in Kontakt mit den organischen Fasern (531a) und der das aktive Material der negativen Elektrode enthaltenden Schicht (520), und dritte Festelektrolytpartikel (533c), die nicht in Kontakt mit einer von der das aktive Material der positiven Elektrode enthaltenden Schicht (510) und der das aktive Material der negativen Elektrode enthaltenden Schicht (520) sind und innerhalb der Schicht (531) von organischen Fasern (531a) positioniert sind, einschließt.

2. Elektrodengruppe (500) nach Anspruch 1, wobei mindestens ein Teil der ersten und zweiten Festelektrolytpartikel (533a, 533b) in den organischen Fasern (531a) eingeschlossen sind.

3. Elektrodengruppe (500) nach Anspruch 1 oder 2, wobei eine Porosität der Schicht (531) von 30 % bis 80 % beträgt.

4. Elektrodengruppe (500) nach einem der Ansprüche 1 bis 3, wobei die organischen Fasern (531a) einen Teil in Kontakt mit der das aktive Material der positiven Elektrode enthaltenden Schicht (510) und einen Teil in Kontakt mit der das aktive Material der negativen Elektrode enthaltenden Schicht (520) umfassen.

5. Elektrodengruppe (500) nach einem der Ansprüche 1 bis 4, wobei der Separator (53) weiter eine erste Festelektrolytschicht (532a), die zwischen der Schicht (531) und der das aktive Material der positiven Elektrode enthaltenden Schicht (510) positioniert ist und die die ersten Festelektrolytpartikel (533a) einschließt, und eine zweite Festelektrolytschicht (532b), die zwischen der Schicht (531) und der das aktive Material der negativen Elektrode enthaltenden Schicht (520) positioniert ist und die die zweiten Festelektrolytpartikel (533b) einschließt, umfasst.

6. Elektrolytgruppe (500) nach einem der Ansprüche 1 bis 5, wobei das aktive Material der negativen Elektrode mindestens eine Verbindung umfasst, die ausgewählt ist aus der Gruppe, bestehend aus einem Lithiumtitanat mit einer Ramsdellitstruktur, einem Lithiumtitanat mit einer Spinellstruktur, einem monoklinischen Titandioxid, einem Titandioxid vom Anatasetyp, einem Titandioxid vom Rutiltyp, einem Titancompositoxid vom Hollandittyp, einem orthorhombischen Titan enthaltend Compositoxid und einem monoklinischen Niobtitancompositoxid.

7. Sekundärbatterie (100) umfassend:

   die Elektrodengruppe (500) nach einem der Ansprüche 1 bis 6; und
   einen Elektrolyten.

8. Batteriepack (300) umfassend die Sekundärbatterie (100) nach Anspruch 7.

9. Batteriepack (300) nach Anspruch 8, weiter umfassend:

   einen externen Leistungsverteilungsanschluss (347); und
   eine Schutzschaltung (344).

10. Batteriepack (300) nach Anspruch 8 oder 9, das eine Vielzahl der Sekundärbatterien (100) einschließt, wobei die Vielzahl der Sekundärbatterien (100) elektrisch in Reihe, parallel oder in einer Kombination aus Reihenschaltung und Parallelschaltung geschaltet sind.

11. Fahrzeug (400), umfassend das Batteriepack (300) nach einem der Ansprüche 8 bis 10.

12. Stationäre Stromversorgung (110), umfassend das Batteriepack (300) nach einem der Ansprüche 8 bis 10.

**Revendications**

1. Groupe d'électrodes (500) comprenant :

   une électrode positive (51) comprenant une couche contenant un matériau actif d'électrode positive (510) contenant un matériau actif d'électrode positive ;
   une électrode négative (52) comprenant une couche contenant un matériau actif d'électrode négative (520) contenant un matériau actif d'électrode négative ; et

un séparateur (53) positionné au moins entre l'électrode positive (51) et l'électrode négative (52),
dans lequel le séparateur (53) comprend une couche (531) incluant des fibres organiques (531a), des premières particules d'électrolyte solide (533a) en contact avec les fibres organiques (531a) et la couche contenant un matériau actif d'électrode positive (510), des deuxièmes particules d'électrolyte solide (533b) en contact avec les fibres organiques (531a) et la couche contenant un matériau actif d'électrode négative (520) et des troisièmes particules d'électrolyte solide (533c) qui ne sont pas en contact avec l'une quelconque de la couche contenant un matériau actif d'électrode positive (510) et de la couche contenant un matériau actif d'électrode négative (520) et sont positionnées à l'intérieur de la couche (531) de fibres organiques (531a).

2. Groupe d'électrodes (500) selon la revendication 1, dans lequel au moins une partie des premières et deuxièmes particules d'électrolyte solide (533a, 533b) est incluse à l'intérieur des fibres organiques (531a).

3. Groupe d'électrodes (500) selon la revendication 1 ou 2, dans lequel une porosité de la couche (531) est de 30 % à 80 %.

4. Groupe d'électrodes (500) selon l'une quelconque des revendications 1 à 3, dans lequel les fibres organiques (531a) comprennent une partie en contact avec la couche contenant un matériau actif d'électrode positive (510) et une partie en contact avec la couche contenant un matériau actif d'électrode négative (520).

5. Groupe d'électrodes (500) selon l'une quelconque des revendications 1 à 4, dans lequel le séparateur (53) comprend en outre une première couche d'électrolyte solide (532a) positionnée entre la couche (531) et la couche contenant un matériau actif d'électrode positive (510) et incluant les premières particules d'électrolyte solide (533a), et une deuxième couche d'électrolyte solide (532b) positionnée entre la couche (531) et la couche contenant un matériau actif d'électrode négative (520) et incluant les deuxièmes particules d'électrolyte solide (533b).

6. Groupe d'électrodes (500) selon l'une quelconque des revendications 1 à 5, dans lequel le matériau actif d'électrode négative comprend au moins un composé sélectionné dans le groupe constitué d'un titanate de lithium ayant une structure de Ramsdellite, d'un titanate de lithium ayant une structure en spinelles, d'un dioxyde de titane monoclinique, d'un dioxyde de titane de type anatase, d'un dioxyde de titane de type rutile, d'un oxyde composite de titane de type hollandite, d'un oxyde composite contenant du titane orthorhombique et d'un oxyde composite de titane et de niobium monoclinique.

7. Batterie secondaire (100) comprenant :

le groupe d'électrodes (500) selon l'une quelconque des revendications 1 à 6 ; et
un électrolyte.

8. Bloc-batterie (300) comprenant la batterie secondaire (100) selon la revendication 7.

9. Bloc-batterie (300) selon la revendication 8, comprenant en outre :

une borne de distribution d'énergie externe (347) ; et
un circuit protecteur (344).

10. Bloc-batterie (300) selon la revendication 8 ou 9, qui inclut une pluralité des batteries secondaires (100), dans lequel la pluralité des batteries secondaires (100) sont connectées électriquement en série, en parallèle ou dans une combinaison série-parallèle.

11. Véhicule (400) comprenant le bloc-batterie (300) selon l'une quelconque des revendications 8 à 10.

12. Alimentation électrique fixe (110) comprenant le bloc-batterie (300) selon l'une quelconque des revendications 8 à 10.

F I G. 1

F I G. 2

F I G. 3

F I G. 4

FIG. 5

FIG.6

FIG.7

F I G. 8

F I G. 9

F I G. 10

F I G. 11

F I G. 12

F I G. 13

F I G. 14

F I G. 15

F I G. 16

**EP 3 544 084 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014342209 A1
- US 2014017557 A1
- US 2018006324 A1
- EP 3297069 A1
- US 2014199598 A1